# EUROPEAN PATENT APPLICATION

(11) **EP 4 054 160 A1**
(43) Date of publication of application: **07.09.2022**
(21) Application number: 22158791.8
(22) Date of filing: 25.02.2022
(51) Int. Cl.: H04M 1/72424, H04M 1/72412, H04M 1/72409, H04M 1/21, H04M 1/23, G08B 25/01

(54) **MOBILE DEVICE WITH USER ACTIVATED ALARM**

(30) Priority: 03.03.2021 US 202117191621
(71) Applicant: KATANA SAFETY, INC., Greenville SC 29601 (US)
(72) Inventor: BALDREE, Todd W., Greer, 29650 (US)
(74) Representative: Fish & Richardson P.C.

(57) **Abstract**

The subject matter of this specification can be embodied in, among other things, a mobile accessory device includes a housing, a user input apparatus configured to activate in response to input by a user and including (a) a trigger component movable relative to the housing and comprising a feature configured to facilitate movement of the trigger component relative to the housing, the feature comprising at least one of a slot, a void, or a recess, and, (b) a sound detection circuit configured to activate in response to one or more predetermined sounds, or (c) both, and a first communication circuit configured to activate and communicate with a second communication circuit in response to activation of the user input apparatus.

## Description

### CROSS-REFERENCE TO RELATED APPLICATIONS

This application is a continuation-in-part application of and claims priority to U.S. Application Serial No. 16/986,159, filed August 5, 2020, which is a continuation of U.S. Application Serial No. 16/844,783, filed April 9, 2020, which is a continuation of U.S. Application Serial No. 16/435,379, filed June 7, 2019, which is a continuation-in-part application of and claims priority to U.S. Application Serial No. 16/163,434, filed October 17, 2018, which is a continuation of U.S. Application Serial No. 15/642,267, filed July 5, 2017, which claims the benefit of U.S. Application Serial No. 62/358,996, filed July 6, 2016, the disclosures of which are incorporated by reference.

### TECHNICAL FIELD

The present disclosure relates to a mobile accessory device, for example, one that includes an alarm device for personal protection purposes.

### BACKGROUND

Personal safety remains a challenge for essentially all people. Over the course of one's life, there may be situations in which he or she feels that his or her personal safety is at risk. Because many people now routinely carry a mobile device (e.g., a mobile phone), a person who believes that his or her personal safety is at risk can use the device to manually contact (e.g., by text message or phone call) someone else, for example, the police or other entity, to alert them to the person's current situation. In this way, help can be summoned to assist the person whose safety is at risk.

### SUMMARY

In general, this document describes a mobile accessory device that includes, e.g., an alarm device for personal protection purposes.

In an example aspect, a mobile accessory device includes a housing, a user input apparatus configured to activate in response to input by a user and including (a) a trigger component movable relative to the housing and comprising a feature configured to facilitate movement of the trigger component relative to the housing, the feature comprising at least one of a slot, a void, or a recess, and, (b) a sound detection circuit configured to activate in response to one or more predetermined sounds, or (c) both, and a first communication circuit configured to activate and communicate with a second communication circuit in response to activation of the user input apparatus.

Various embodiments can include some, all, or none of the following features. The trigger component can be at least partly retained within a slot defined in the housing, and the trigger component can be configured to move along a portion of the slot. The housing can be configured to mechanically engage a mobile device. The housing can be configured to magnetically attach to a mobile device. The mobile accessory device can also include at least one of a magnet and a magnetic material. The one or more predetermined sounds can include one or more utterances that can be recognized when spoken by the user. The second communication circuit can be configured to communicate with one or more cellular networks. The second communication circuit can be in wired communication with the first communication circuit. The second communication circuit can be disposed within the housing. The mobile accessory device can also include an alarm device having (i) an audio output device, (ii) a light output device, or (iii) both, configured to activate in response to activation of the user input apparatus. Communication with the second communication circuit can cause a software application to be executed on a mobile device. The housing can define a cavity configured to retain one or more credit cards or identification cards. A mobile device can include the second communication circuit. The mobile accessory device can be a standalone personal safety device configured to communicate with cellular networks. The first communication circuit can be further configured to communicate a position location, determined by a position location detector system, to the second communication circuit in response to activation of the user input apparatus. The mobile accessory device can include the position location detector system.

In another example aspect, a mobile accessory device includes a housing, a user input apparatus configured to activate in response to input by a user and having (a) a trigger component moveable relative to the housing and comprising a feature configured to facilitate movement of the trigger component relative to the housing, the feature comprising at least one of a slot, a void, or a recess, (b) a sound detection circuit configured to activate in response to one or more predetermined sounds, or (c) both, and control circuitry to control operation of the mobile accessory device, the control circuitry at least partly disposed in the housing and configured to perform operations including establishing a communications connection to communication circuitry, detecting activation of the user input apparatus, and in response to the activation, communicating with the communication circuitry.

Various embodiments can include some, all, or none of the following features. The trigger component can be at least partly retained within a slot defined in the housing, and the trigger component can be configured to move along a portion of the slot. The housing can be configured to mechanically engage a mobile device. The housing can be configured to magnetically attach to a mobile device. The mobile accessory device can include at least one of a magnet and a magnetic material. The one or more predetermined sounds can include one or more utterances that can be recognized when spoken by the user. The communication circuitry can be configured to communicate with one or more cellular networks. The communication circuitry can be in wired communication with the control circuitry. The communication circuitry can be disposed within the housing. The mobile accessory device can include an alarm device comprising (i) an audio output device, (ii) a light output device, or (iii) both, configured to activate in response to activation of the user input apparatus. Communication with the communication circuitry can (i) cause an audible alarm to be emitted by an audio output device, or (ii) cause a software application to be executed on a mobile device, or (iii) both. The housing can define a cavity configured to retain one or more credit cards or identification cards. A mobile device can include the communication circuitry. The mobile accessory device can be a standalone personal safety device configured to communicate with cellular networks. The communication circuitry can be configured to communicate a position location, determined by a position location detector system, in response to activation of the user input apparatus. The control circuitry can include the position location detector system.

In another example aspect, a method of communication includes detecting, by control circuitry of a mobile accessory device, user input based on activation of a user input apparatus having (a) a trigger component moveable relative to a housing of the mobile accessory device and including a feature configured to facilitate movement of the trigger component relative to the housing, the feature comprising at least one of a slot, a void, or a recess, (b) a sound detection circuit configured to activate in response to one or more predetermined sounds, or (c) both, and establishing a communications connection from the control circuitry to a communication circuit, and communicating with the communication circuit.

Various implementations can include some, all, or none of the following features. The trigger component can be at least partly retained within a slot defined in the housing, and the trigger component can be configured to move along a portion of the slot. The method can include moving the trigger component relative to the housing, and activating the user input apparatus based on the moving. The method can include receiving, by the sound detection circuit, a sound, identifying, by the sound detection circuit, the sound as corresponding to a predetermined sound, and activating the user input apparatus based on the identifying. The method can include uttering, by a user, the sound. The method can include mechanically engaging the housing to a mobile device. The method can include magnetically attaching the housing to a mobile device. Communicating with the communication circuit can include communicating with one or more cellular networks. The communication connection can include a wired communication connection. The method can include activating, in response to the detecting, an alarm device having (i) an audio output device, (ii) a light output device, or (iii) both. The method can include (i) causing an audible alarm to be emitted by an audio output device, or (ii) causing a software application to be executed on a mobile device, or (iii) both. The method can also include determining, by a position location detector system, a position location of the mobile accessory device, and communicating, in response to the detecting, the determined position location. The mobile accessory device can include the position location detector system.

The systems and techniques described here may provide one or more of the following potential advantages. For example, the mobile accessory device as described herein may provide protection for a user of the accessory who comes under attack or assault by another entity (e.g., another human or an animal) by performing one or more of the following actions upon activation of the accessory: causing the mobile device to perform an operation such as sending a message or call for help, turning on the mobile device's camera, microphone, speaker, light or the like, and/or emitting a human perceptible alarm designed to draw attention to the user and/or scare off the attacker.

Details of one or more implementations are set forth in the accompanying drawings and the description below. Other features and potential advantages will be apparent from the description and drawings, and from the claims.

### DESCRIPTION OF DRAWINGS

FIG. 1 illustrates a perspective view of a mobile accessory device coupled to a mobile device.
FIG. 2 illustrates a side view of the mobile accessory device and mobile device of FIG. 1.
FIG. 3 illustrates an alternate perspective view of the mobile accessory device and mobile device of FIG. 1.
FIG. 4 illustrates an alternate perspective view of the mobile accessory device and mobile device of FIG. 1 wherein a power source of the mobile accessory device is removed.
FIG. 5 illustrates an alternate perspective view of the mobile accessory device and mobile device of FIG. 1 wherein a wrist strap of the mobile accessory device is in use.
FIG. 6 illustrates an alternate perspective view of the mobile accessory device and mobile device of FIG. 1 wherein a user separation sensor arrangement activates an alarm device.
FIG. 7 schematically illustrates components of the mobile device and the mobile accessory device of FIG. 1.
FIG. 8 illustrates an enlarged view of the switch of the mobile accessory device of FIG. 1.
FIG. 9 schematically illustrates components of the alarm device of FIG. 7.
FIG. 10 illustrates an embodiment of the mobile accessory device including the switch of FIG. 8.
FIG. 11 illustrates a mobile accessory device provided in the form of a case.
FIG. 12 illustrates a mobile accessory device wherein the mobile accessory device is substantially rectangular with rounded comers.
FIG. 13 illustrates a mobile accessory device wherein the mobile accessory device is round.
FIG. 14 illustrates a mobile accessory device wherein the user separation sensor arrangement includes a wireless wearable component.
FIGS. 15-18 illustrate a mobile accessory device wherein the mobile accessory device is ovular.
FIG. 19 illustrates a mobile accessory device wherein a wearable component of the user separation sensor arrangement is not attached for illustration purposes.
FIG. 20 illustrates a mobile accessory device wherein a mobile device is not attached for illustration purposes.
FIG. 21 illustrates a mobile accessory device wherein the mobile accessory device is attached to a case for the mobile device.
FIGs. 22A-F illustrate steps associated with usage of a wrist strap of the mobile accessory device of FIG. 21.
FIG. 23 illustrates a personal safety device that does not require usage of a separate mobile device.
FIG. 24 illustrates a rear view of a mobile accessory device coupled to a mobile device and including a nail slot.
FIG. 25 illustrates a perspective view of a mobile accessory device and mobile device of FIG. 24.
FIG. 26 illustrates an alternate perspective view of the mobile accessory device and mobile device of FIG. 24.
FIG. 27 illustrates a rear view of a mobile accessory device coupled to a mobile device and including an enlarged nail slot.
FIG. 28 illustrates a perspective view of the mobile accessory device and mobile device of FIG. 27.
FIG. 29 illustrates a perspective side view of another example mobile accessory device.
FIG. 30 illustrates a front view of the example mobile accessory device of FIG. 29.
FIG. 31 illustrates a top perspective view of the example mobile accessory device of FIG. 29.
FIG. 32 illustrates an alternate top perspective view of the example mobile accessory device of FIG. 29.
FIG. 33 illustrates a bottom perspective view of the example mobile accessory device of FIG. 29.
FIG. 34 illustrates an alternate bottom perspective view of the example mobile accessory device of FIG. 29.
FIG. 35 illustrates a perspective rear view of the example mobile accessory device of FIG. 29.
FIG. 36 is a flow chart of an example process for using an example mobile accessory device.
FIGs. 37a and 37b illustrate a personal safety device that engages a portion of a mobile device or a companion mobile accessory.
FIG. 38 illustrates a perspective view of the example personal safety device and companion mobile accessory of FIGs. 37a-37b.
FIG. 39 illustrates a front view of the example personal safety device and companion mobile accessory of FIGs. 37a-37b.
FIG. 40 illustrates a rear perspective view of the example personal safety device and companion mobile accessory of FIGs. 37a-37b.
FIG. 41 illustrates a perspective front view of the example personal safety device of FIGs. 37a-37b.
FIG. 42 illustrates an alternate perspective front view of the example personal safety device of FIGs. 37a-37b.
FIG. 43 illustrates a perspective rear view of the example personal safety device of FIGs. 37a-37b.
FIG. 44 illustrates a perspective front view of the companion mobile accessory of FIGs. 37a-37b.
FIG. 45 illustrates a perspective rear view of the companion mobile accessory of FIGs. 37a-37b.
FIG. 46 is a flow chart of an example process for using an example mobile accessory device.
FIG. 47 illustrates a perspective front view of a mobile accessory device that engages a portion of a mobile device or a companion mobile accessory.
FIG. 48 illustrates a perspective rear view of the mobile accessory device of FIG. 47.
FIGs. 49A and 49B illustrate a sectional view of the mobile accessory device of FIG. 47.
FIG. 50 illustrates a perspective from view of the example mobile accessory device of FIG. 47 and an example companion mobile accessory.
FIG. 51 illustrates a perspective rear view of the example mobile accessory device and companion mobile accessory of FIG. 50.
FIG. 52 illustrates a partially exploded perspective side view of the example mobile accessory device and companion mobile accessory of FIG. 50.
FIGs. 53 and 54 illustrate an example mobile accessory device having magnetic features.
FIG.s 55A and 55B illustrate perspective and side views of an example of a mobile accessory device button.
FIG.s 56A and 56B illustrate perspective and side views of another example of a mobile accessory device button.
FIG. 57 is a flow chart of an example process using an example mobile accessory device.

### DETAILED DESCRIPTION

This document describes systems and techniques for providing personal protection in the form of an alarm accessory for a mobile device. In general, a mobile device, e.g., a cellular telephone (phone) or a mobile phone, can be modified (e.g., attached to an accessory and/or through the use of specialized software on the mobile device), to respond to one or more predetermined conditions to automatically, and/or with user interaction, trigger an alarm and thereby draw attention to that person's present circumstances in order to seek help and/or scare away a potential threat. Accordingly, this document describes, among other things, an accessory that can be attached to the mobile device and provide enhanced safety functionality to a user of the mobile device. Various configurations of such a mobile accessory device and its use are described herein, and may include various combinations of the following features and/or functionality. The accessory may be embodied in many different forms and should not be construed as limited to the implementations set forth herein. As used in the specification, and in the appended claims, the singular forms "a", "an", "the", include plural variations unless the context clearly dictates otherwise.

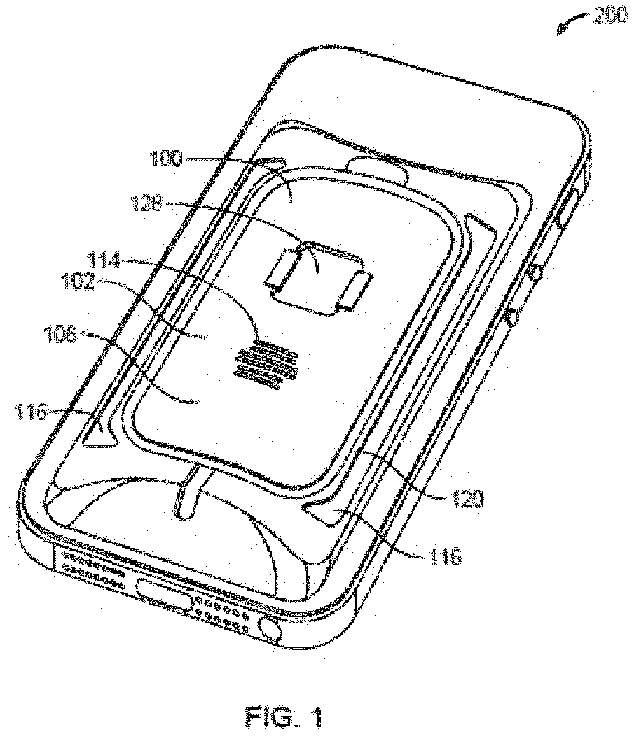

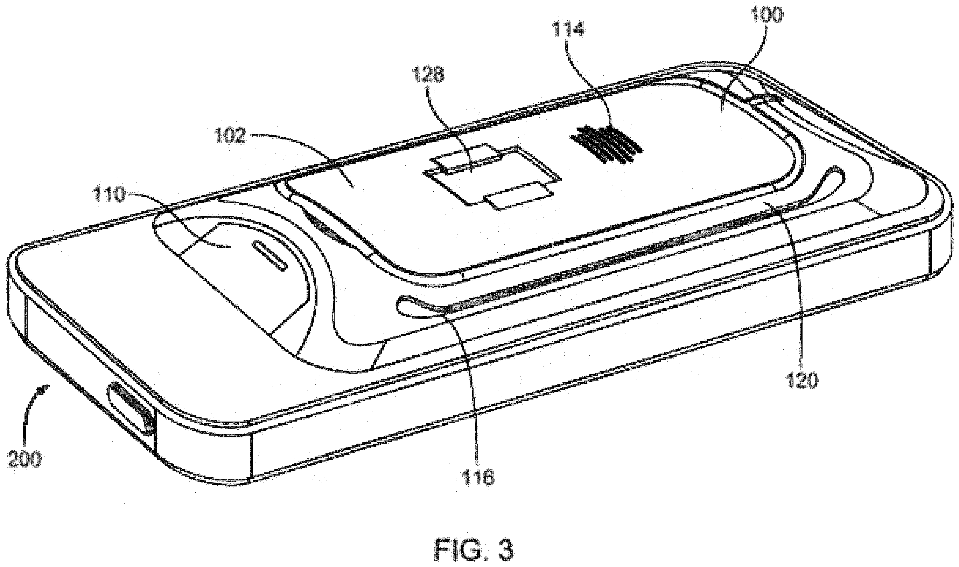

As illustrated in FIGS. 1-6, the present disclosure relates to a mobile accessory device 100, also referred to a mobile accessory device. The mobile accessory device 100 may be configured for use with a mobile device such as a mobile phone 200 or other mobile device (e.g., tablet computer, notebook computer, etc.). In particular, the mobile accessory device 100 may be configured to engage (e.g., adhere to or otherwise be physically joined to) the mobile phone 200. The mobile accessory device 100 may be configured to engage any portion of the mobile phone 200, such as the rear surface of the housing of the mobile phone 200. In some embodiments, the mobile accessory device 100 may be a stand-alone device that does not physically engage to a mobile device.

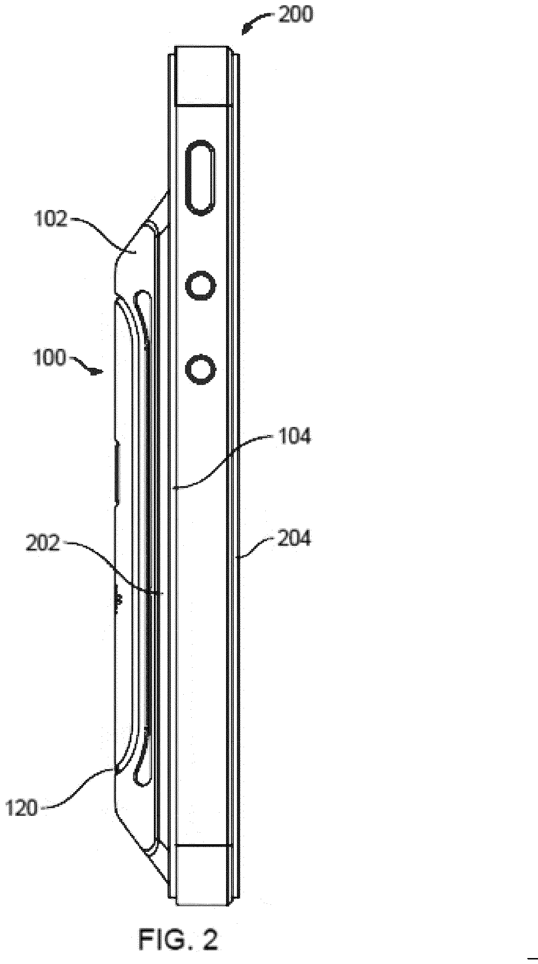

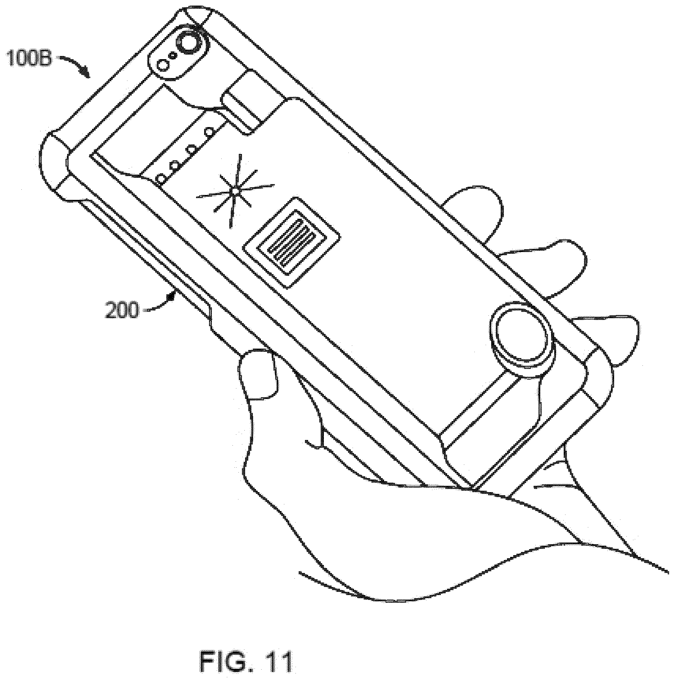

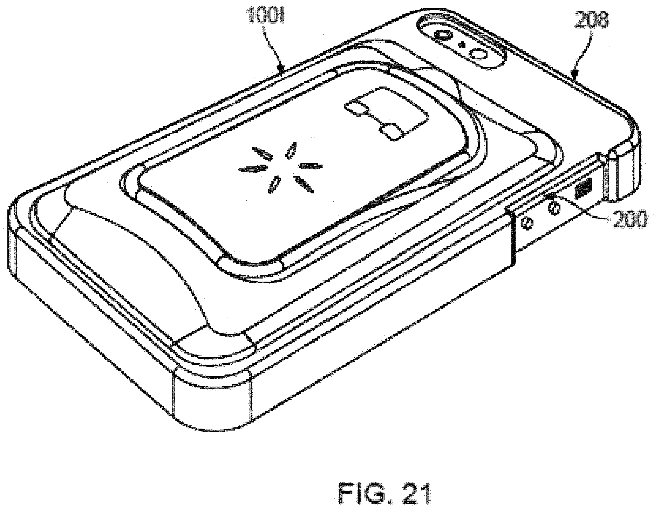

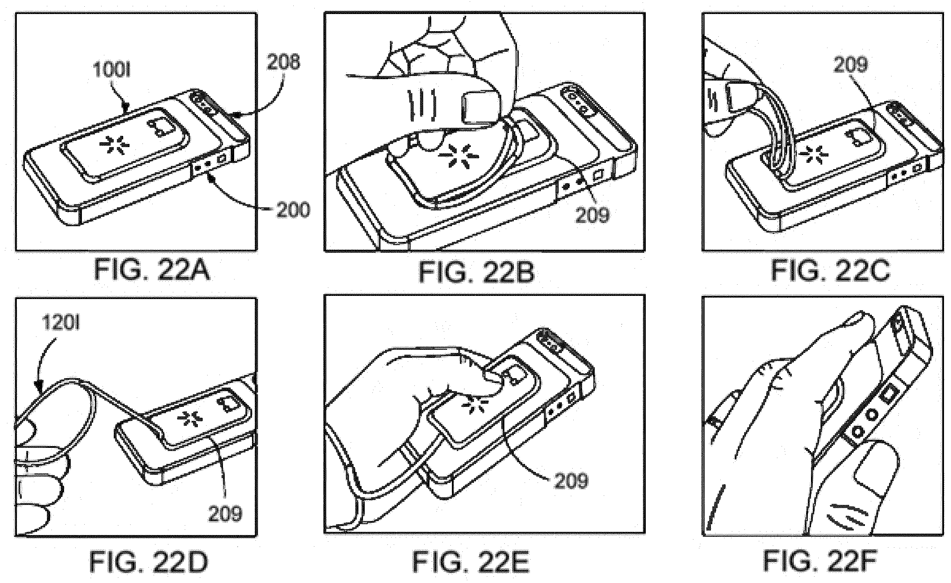

In one implementation, the mobile accessory device 100 may include a housing 102. The housing 102 may define an attachment (e.g., locking) surface 104 (see, FIG. 2) and an outer surface 106 (see, e.g., FIG. 1). As illustrated in FIG. 2, the attachment surface 104 may be configured to engage a rear surface 202 of the mobile phone 200 opposite from a front surface 204 at which a display is positioned. Thereby, the mobile accessory device 100 does not block the display in this configuration. Further, the mobile accessory device 100 may occupy less than an entirety of an area of the rear surface 202 of the mobile phone 200. Thereby, the mobile accessory device 100 may not block any rear-facing camera thereon. Further, by providing the mobile accessory device 100 with a relatively small size, the mobile accessory may be attached to mobile phones with differing sizes and shapes. Further, the mobile accessory device 100 may be configured to not extend to the edges of the mobile phone 200, such that an edge protecting case may be employed with the mobile phone. As may be understood, the mobile accessory may also be configured to engage a case for the mobile phone that includes a rear portion that covers the rear surface (see, e.g., FIGS. 21 and 22). In another embodiment, the mobile accessory may itself comprise a case for the mobile phone (see, e.g., FIG. 11).

The attachment surface 104 of the housing 102 may be configured to substantially permanently engage the rear surface 202 of the mobile phone 200, or a case positioned at the rear surface as noted above. For example, the mobile accessory device 100 may include an adhesive at the attachment surface 104 configured to adhere to the rear surface 202 of the mobile phone 200. Thereby, the mobile accessory device 100 may be configured for use over the lifetime of the mobile phone 200, thereby ensuring that the mobile accessory is available at all times the mobile phone is in the user's possession. Alternatively, the attachment surface 104 of the housing 102 may be configured to releasably engage (e.g., using a slot-tab arrangement, or hook and loop connecting surfaces such as VELCRO^{®}) the rear surface 202 of the mobile phone 200, or a case positioned at the rear surface as noted above.

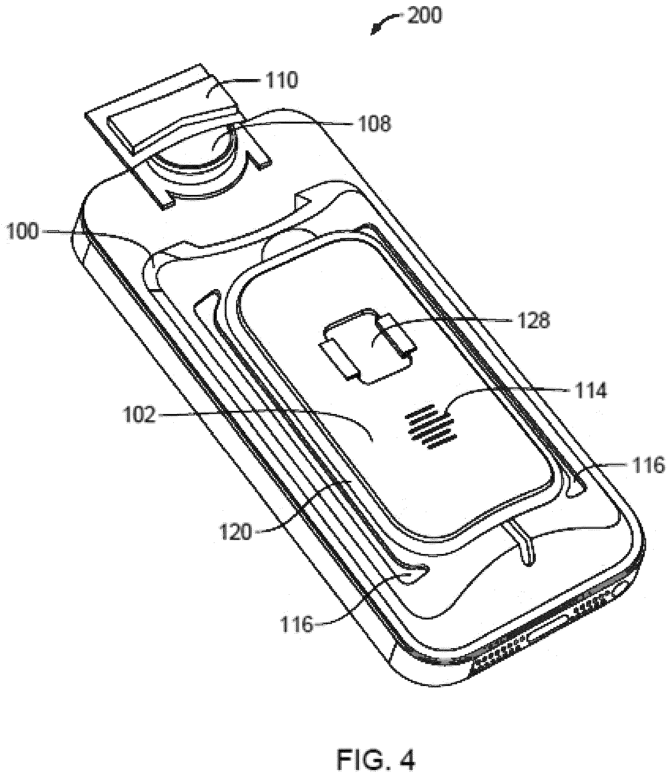

As illustrated in FIG. 4, the mobile accessory device 100 may include a power source 108, which may be a battery. Further, the housing 102 may include a battery portion 110 that is configured to receive the power source 108. The battery portion 110 may be removable to allow for replacement of the power source 108. The power source 108 may be configured to provide electrical power to each of the components of the mobile accessory device 100 such that the mobile accessory is self-powered. However, as may be understood, in another implementation the mobile accessory may be configured to receive electrical power from the mobile phone. For example, the mobile accessory may include a connector that engages a power port or a headphone jack on the mobile phone. Alternatively, or in addition, the mobile accessory may draw power from the phone wirelessly via a technique akin to QI^{®} inductive charging, but in reverse (e.g., reverse wireless charging, wireless power sharing).

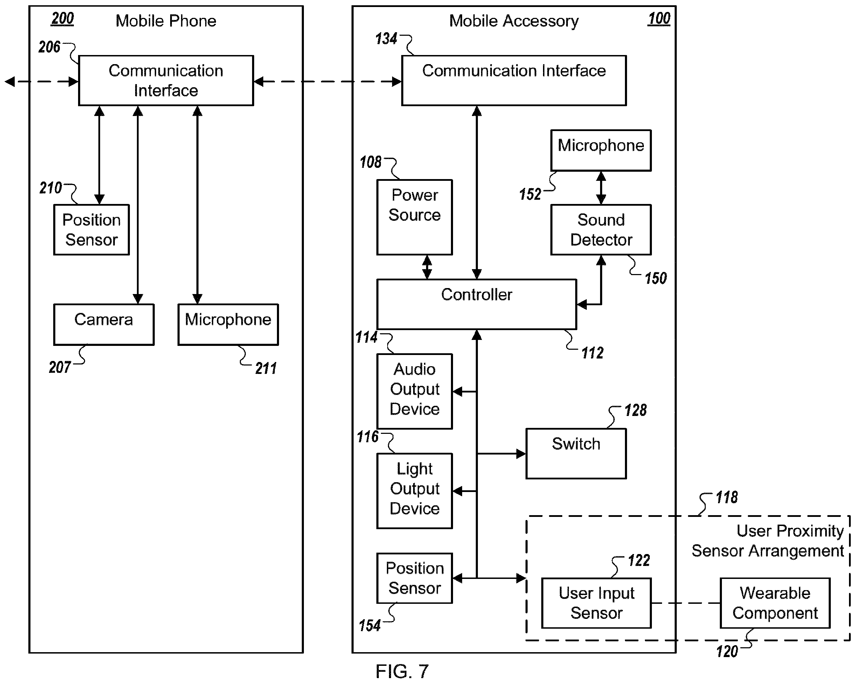

Additional control circuitry components of the mobile accessory device 100 and the mobile phone 200 are schematically illustrated in FIG. 7. As illustrated, the mobile accessory device 100 includes a controller 112, which may be at least partially received in the housing 102. The controller 112 is in communication with the mobile phone 200 (e.g., a communications connection, BLUETOOTH, USB) for providing signals to the mobile phone 200, for example, to request, trigger, command, or otherwise control operation of at least some operation or actions of the mobile phone 200. The controller 112 may include an audio output device 114 such as a speaker and a light output device 116 such as a light emitting diode (LED) or xenon strobe. Example positions and configurations of the audio output device 114 and the light output device 116 are illustrated in FIGS. 1 and 3-6.

As further illustrated in FIG. 7, the control circuitry of the mobile accessory device 100 includes a user separation sensor arrangement 118 (e.g., proximity detector). The user separation sensor arrangement 118 may include a wearable component 120 configured to engage (e.g., donned by, worn by) a user and a user input sensor 122 (e.g., a user input apparatus) engaged with the housing 102 and in communication with the controller 112. The controller 112 may be configured to activate and/or perform one or more predetermined operations in response to the user input sensor 122's determining that the wearable component 120 exceeds a threshold separation distance therefrom, and/or has become detached (e.g., mechanically separated) from the mobile accessory device 100, e.g., providing an alarm signal to indicate that separation between the mobile accessory device 100 and the wearable component 120 has occurred, in response to which one or more actions can occur-e.g., sounding an audible alarm on the accessory, emitting light from a light source on the accessory, cause the attached phone's flash light to turn on or strobe, cause the attached phone to transmit a message via text and/or phone call, cause the mobile phone to emit sound, cause the mobile phone to take photos or begin recording video, either through the forward-facing camera or the rearward-facing camera or the both, or otherwise any operation within the attached phone's functionalities. Note that any phone-based action could be achieved by the accessory's transmitting to the mobile phone that an alarm condition has been detected, e.g., in response to the user's pushing a button on the accessory, or in response to the proximity between the accessory and the wearable component being exceeded and/or in response to the wearable component being mechanically disconnected from the accessory.

As further illustrated in FIG. 7, the control circuitry of the mobile accessory device 100 includes a sound detector arrangement 150 (e.g., a sound detection circuit). The sound detector arrangement 150 includes circuitry that is configured to receive sound signals from a microphone 152 and identify one or more predetermined sounds. The controller 112 is configured to provide one or more predetermined actions in response to the identification of one or more corresponding sounds. In some implementations, the sound detector arrangement 150 can be configured to recognize one or more utterances (e.g., words, phrases, or other sounds produced by a user). In some implementations, the sound detector arrangement 150 can be configured to recognize one or more non-spoken sounds (e.g., screams or other sounds of distress, smoke alarms, glass breakage, car crash sounds). The controller 112 may be configured to activate and/or perform one or more predetermined operations in response to the sound detector arrangement identification of a predetermined command or sound, e.g., providing an alarm signal in response to the user saying "help!" or "call 911!" or screaming, in response to which one or more actions can occur-e.g., sounding an audible alarm on the accessory, emitting light from a light source on the accessory, causing the attached phone's flash light to turn on or strobe, causing the attached phone to transmit a message via text and/or phone call, causing the mobile phone to emit sound, causing the mobile phone to take photos or begin recording video, either through the forward-facing camera or the rearward-facing camera or the both, or otherwise any operation within the attached phone's functionalities. Note that any phone-based action could be achieved by the accessory's transmitting to the mobile phone that an alarm condition has been detected, e.g., in response to the user's pushing a button on the accessory, or in response to the proximity between the accessory and the wearable component being exceeded and/or in response to the wearable component being mechanically disconnected from the accessory, and/or in response to detection of a predetermined sound.

In some implementations, the controller 112 may be configured to activate a function of the mobile phone 200 in response to the sound detector arrangement identification of a predetermined sound. For example, the mobile phone 200 may be configured with a voice assistant (e.g., GOOGLE ASSISTANT, SIRI, ALEXA, CORTANA, BIXBY), and the sound detector arrangement 150 can be configured to recognize one or more "wake up" phrases associated with voice assistants that are installed on the mobile phone 200 (e.g., "ok Google", "hey Siri", "Alexa", "hey Cortana", "hi Bixby"), and the accessory 100 can send a command to the mobile phone 200 that will activate the corresponding voice assistant to process the rest of the user's command. In some implementations, the microphone 152 may be configured as a supplement or substitute for the microphone 211. In some implementations, the mobile accessory device 100 can unlock access to a voice assistant on the mobile phone 200. For example, some configurations of mobile phones and/or voice assistants may require the user to first unlock the mobile phone or perform some other preliminary action before a voice assistant can respond to verbal commands. The mobile accessory device 100 can recognize a "wake up" word/phrase and send a command to the mobile phone 200, where an application running in the background on the mobile phone 200 can receive the command and respond by unlocking the mobile phone 200 and/or otherwise placing the voice assistant in condition to respond to the user. In some implementations, the user can choose to opt-in to grant the phone application sufficient security privileges to bypass or otherwise release phone security features (e.g., screen locks) that need to be dismissed in order to make the voice assistant responsive and/or useful.

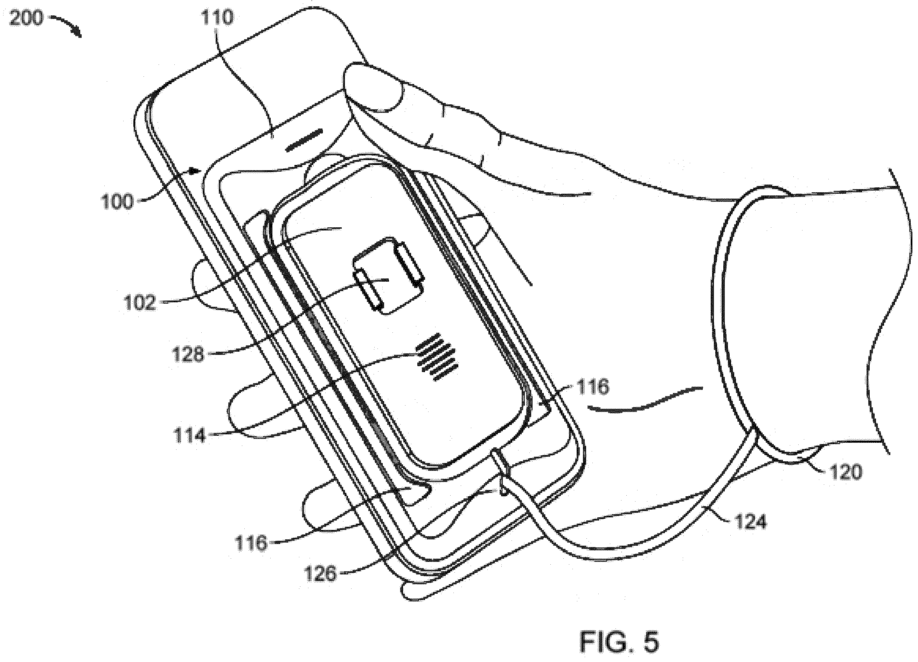

With regard to wearable components, as illustrated in FIG. 5, in one embodiment the wearable component 120 may comprise a wrist strap. Initially, the user input sensor 122 and the wearable component 120 of the user separation sensor arrangement 118 may be physically connected. For example, as illustrated in FIG. 5, a lanyard 124 (e.g., mechanical tether) may connect the wearable component 120 to the housing 102 via a connector 126.

As noted above, the controller 112 may be activated in response to receipt of a signal generated by the user separation sensor arrangement 118 when the user separation sensor arrangement 118 determines that the wearable component 120 has become physically detached from the accessory, and/or exceeds a threshold separation distance from the user input sensor 122. Thereby, the threshold separation distance may be defined between the housing 102 and the wearable component 120. Thus, for example, the lanyard 124 may have a predetermined length that at least partially defines the threshold distance, and the lanyard may be configured to mechanically and/or electrically attach to the housing 102 and separate from the housing 102 when the distance between the wearable component 120 and the housing 102 exceeds the predetermined length of the lanyard 124. The user separation sensor arrangement 118 can include a user input sensor configured to determine whether the housing 102 and the lanyard are mechanically and/or electrically separated and provide an alarm signal in response.

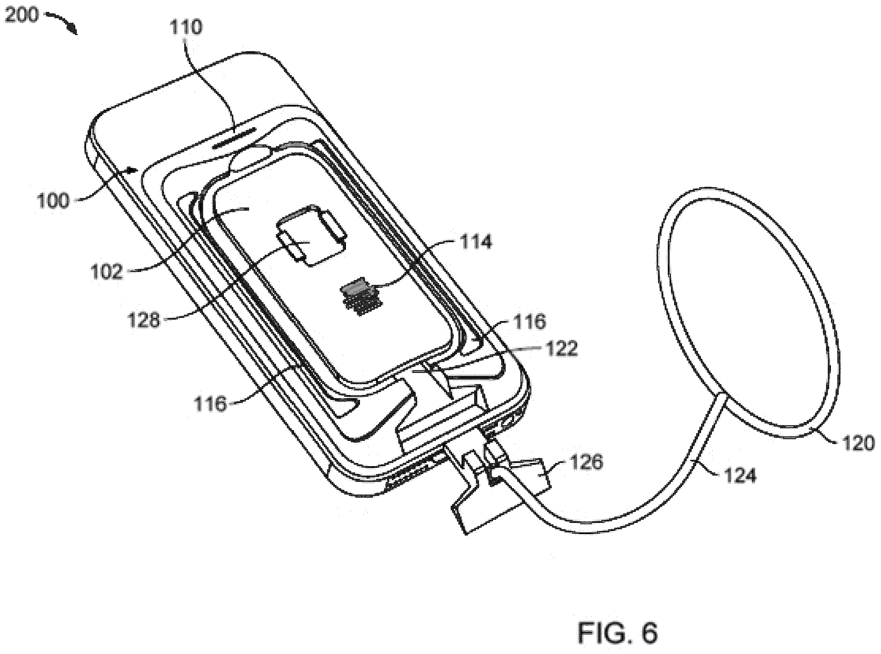

As illustrated in FIG. 6, when a user's wrist to which the wearable component 120 is attached moves away from the housing 102 of the mobile accessory device 100 by a distance exceeding the length of the lanyard 124, the lanyard may pull out (e.g., separate, break away) the connector 126 from the housing 102 and out of engagement with the user input sensor 122, thereby activating the controller 112 (see, FIG. 7).

Further, in one embodiment the connector 126 may include a whistle. Thereby, once the connector 126 is removed from the housing 102, the user may blow on the whistle to bring attention to the user's circumstances, scare away an assailant, and/or summon help.

In an alternate embodiment, the connector extending from the wearable component may be configured to engage a power and/or data port of the mobile phone or a headphone jack thereon. In this embodiment, the mobile phone may itself (e.g., via a software application executing on the mobile phone) detect detachment or separation of the wearable component from the port or jack, thereby activating the alarm device.

As schematically illustrated in FIG. 7, the mobile accessory device 100 may also include a switch 128. The switch 128 may be provided in addition to, or as an alternate for, the user separation sensor arrangement 118. In a preferred embodiment, both the user separation sensor arrangement 118 and the switch 128 are provided.

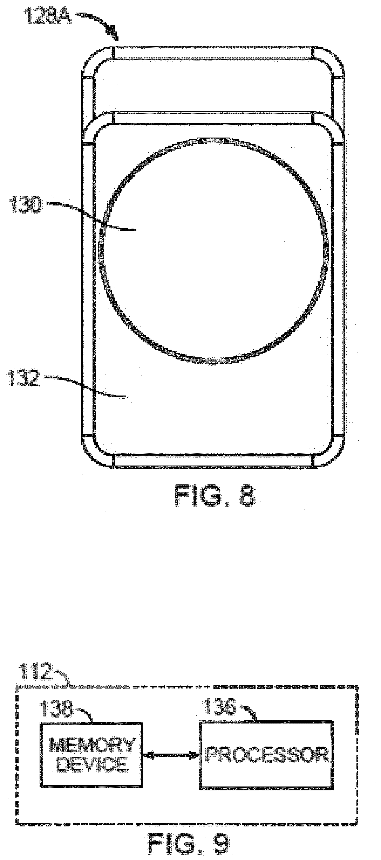

An example embodiment of the switch 128 is illustrated in FIGS. 1 and 3-6. In some embodiments it may be desirable to provide the switch 128 with features configured to prevent accidental actuation thereof so as to avoid accidental activation of the controller 112 (see, FIG. 7). In this regard, in some embodiments actuation of the switch 128 may require movement of the switch along a non-linear path. For example, FIG. 8 illustrates an enlarged example embodiment of an embodiment of the switch 128A. As illustrated, the switch 128A may include a center button 130 and a slider 132. In order to activate the switch 128A, a user may slide the slider 132 in order to depress the center button 130. Thereby, issues with respect to accident actuation of the switch 128A may be mitigated. Various other switches requiring multi-stage actuation may be provided in other embodiments.

The controller 112 may be configured to be activated in response to a signal from the user separation sensor arrangement 118 and/or the switch 128. The particular response by the controller 112 may be set as desired. In some embodiments activation of the controller 112 by the switch 128 may result in the same response as activation of the alarm device by the user separation sensor arrangement 118. However, in other embodiments activation of the controller 112 by the switch 128 may result in a different response as compared to activation of the alarm device by the user separation sensor arrangement 118.

For example, the controller 112 may be configured to output an audible alarm configured to output sounds, predetermined spoken words, and/or noises (e.g., siren, buzzer, bell, speech) that are loud enough to attract attention from others in the vicinity of the mobile phone 200 when the user separation sensor arrangement 118 determines that the threshold separation distance is exceeded. In this regard, one or both of the audio output device 114 and the light output device 116 may be activated. However, in some configurations, the controller 112 may be silently activated when the switch 128 is actuated (e.g., the controller 112 or the mobile phone 200 may be configured to omit the emission of an attention-getting sound during activation). In some embodiments, a silent alarm can refer to any appropriate circuit and/or mechanism for taking a predetermined action in response to a trigger, and does not necessarily require (nor preclude) that the alarm device is itself incapable of generating an audible alarm.

In this regard, the controller 112 may be configured to direct the mobile phone 200 to send a communication (e.g., a telephone call, an SMS text message, an instant message, and email) to one or more predefined recipients in response to actuation of the switch 128. In some implementations, the communication can include one or more predetermined messages (e.g., pre-recorded voice message, pre-configured text or synthesized voice message). In some implementations, the communication can be sent to one or more predetermined recipients (e.g., emergency response center, 911, police, user contacts). The controller 112 may be configured to direct the mobile phone 200 to send a communication to one or more predefined recipients when the user separation sensor arrangement 118 determines that the threshold separation distance from the wearable component 120 is exceeded, and/or that the wearable component 120 has become detached from the mobile accessory device 100.

The controller 112 may be configured to direct the mobile phone 200 to activate a camera 207 (e.g., to capture still or motion video of the surroundings), a microphone 211 (e.g., to capture sounds in the surrounding environment), a position location detector system 154 (e.g., GPS or other location system to identify a local or global location of the phone), light output system to emit a visual indicator (e.g., blink an onboard LED, flash the phone's screen), and/or audio output system (e.g., built-in speaker of the phone, to emit an audible alarm or call for help) of the mobile phone 200, In some implementations, the communication can include one or more of a distress message, positioning coordinates of a determined position location (e.g., based on a GPS sensor in the mobile device), audio captured by mobile device, and video captured by the mobile device. The functionality of being able to send a communication in response to an alarm or other predetermined condition may be implemented by specialized software installed on and executed by the mobile device, for example, a downloadable software application (e.g., app) or other software component.

To transmit such notifications, as schematically illustrated in FIG. 7, the mobile accessory device 100 may further comprise a communication interface 134 (e.g., a communication circuit, communication circuitry). The communication interface 134 may be configured to communicate with a communication interface 206 (e.g., a communication circuit, communication circuitry) of the mobile phone 200 when directed by the controller 112. The communication interface 134 of the mobile accessory device 100 and the communication interface 206 of the mobile phone 200 may be any suitable arrangement, such as a device or circuitry embodied in either hardware, software, or a combination thereof that is configured to receive and/or transmit data. The communication interfaces 134, 206 may be configured to receive and/or transmit data via a wired communication connection or wireless communication connection. In this regard, the communication interfaces 134, 206 may include, for example, an antenna and supporting wireless transmitter, receiver, or transceiver hardware and/or hardwired components and/or software. For example, the communication interface 134 of the mobile accessory device 100 may include a wireless transmitter, receiver, or transceiver configured to communicate with the communication interface 206 of the mobile phone 200 via BLUETOOTH, photonic (e.g., infrared, IRDA), acoustic, ultrasonic, ZigBee, WiFi, or any other appropriate communication format. Further, the communication interface 206 of the mobile phone 200 may be configured to communicate with one or more cellular networks via any known communication standard.

Thereby, the communication interface 206 of the mobile phone 200 may send a communication to one or more designated contacts. The designated contacts may be selected by the user via a user-installable software application that may be loaded on the mobile phone 200. The type and/or content of the message may also be configured within the application.

In some embodiments, the communication may include a phone call with an audible message. For example, a prerecorded message may be played to convey a request for help. Alternatively or additionally, the mobile phone 200 may activate a microphone 211 thereof such that a recipient of the call may receive audio relating to the user of mobile accessory's circumstances (e.g., voice or other sounds corresponding to words or actions of the mobile phone user or anyone or anything else within the range of the mobile phone's microphone 208).

In some embodiments, the communication may include a video communication. For example, the mobile phone 200 may activate a camera 207 thereof such that a recipient of the call may receive video relating to the user of accessory's circumstances (e.g., video and audio within the range of the mobile device's camera 207 and microphone 208).

In some embodiments, the communication may include a text message, an email, or any other electronic communication. Thereby, the communication may include, for example, a message conveying a request for help and/or instructing the recipient to call police or other emergency services. The communication may also include location data regarding a position of the mobile phone 200. For example, the mobile phone 200 may further include a positioning system sensor 210 (e.g., GPS, GLONASS, indoor positioning), which may determine a location thereof, and such location information may be included in the communication transmitted by the communication interface 206 of the mobile phone. In another example, the mobile accessory device 100 may further include a position location detector system 154 (e.g., GPS, GLONASS, indoor positioning), which may determine a location thereof, and such location information may be included in the communication transmitted by the communication interface 134 of the mobile accessory. For example, the recipients of the communication may be provided with an image showing the position of the mobile phone 200 and/or a link to a map showing the position. Such a map may be updated with the positon of the mobile phone 200 such that the position thereof may be tracked in the event that movement occurs. Thereby, emergency service personnel may be directed to the location of the mobile phone 200.

In another embodiment, communications may additionally or alternatively be transmitted to other users of mobile accessory devices in local proximity to the mobile accessory device 100. For example, the communication interface 134 of the mobile accessory device 100 may directly communicate with the communication interface of other nearby mobile phone accessories to alert their users of a nearby user in need of assistance. In some embodiments the mobile accessory devices 100 may form a mesh network via the communication interfaces 134 to expand the reach of the local alerts.

FIG. 9 schematically illustrates control circuitry components of the controller 112 (e.g., an alarm device) according to an embodiment of the present disclosure. As illustrated, the control circuitry of the controller 112 may include or otherwise be in communication with a processor 136 and a memory device 138.

The processor 136 may be embodied in a number of different forms. For example, the processor 136 may be embodied as one or more of various processing means such as a coprocessor, a microprocessor, a controller, a digital signal processor (DSP), processing circuitry, or various other processing devices including integrated circuits such as, for example, a special-purpose computer chip, or other hardware processor. In an example embodiment, the processor 136 may be configured to execute instructions stored in the memory device 138 or otherwise accessible to the processor. Alternatively or additionally, the processor 136 may be configured to execute hard coded functionality. As such, the processor 136 may be capable of performing operations according to embodiments of the present disclosure while configured accordingly. Alternatively, when the processor 136 is embodied as an executor of software instructions, the instructions may specifically configure the processor to perform the operations described herein. The processor 136 may include a clock, an arithmetic logic unit (ALU) and logic gates configured to support operation of the processor, amongst other components.

The memory device 138 may include non-transitory and tangible memory that may be, for example, volatile and/or non-volatile memory. The memory device 138 may be configured to store information, data, files, applications, instructions or the like. For example, the memory device 138 can be configured to buffer input data for processing by the processor 136. Additionally or alternatively, the memory device 138 can be configured to store instructions for execution by the processor 136.

The processor 136 may be configured to execute program code instructions stored on a non-transitory computer readable medium. In this regard, an embodiment of a non-transitory computer readable medium for storing computer instructions executed by a processor (e.g., processor 136) is provided, such as the memory device 138. The non-transitory computer readable medium may comprise program code instructions for performing the alarm operations described herein.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium for controlling the above-described operations. In particular, computer readable code may be configured to perform each of the operations of the methods described herein and embodied as computer readable code on a computer readable medium for controlling the above-described operations. In this regard, a computer readable storage medium, as used herein, refers to a non-transitory, physical storage medium (e.g., a volatile or non-volatile memory device, which can be read by a computer system. Examples of the computer readable medium include read-only memory, random-access memory, CD-ROMs, DVDs, magnetic tape, and optical data storage devices. The computer readable medium can also be distributed over network-coupled computer systems so that the computer readable code is stored and executed in a distributed fashion.

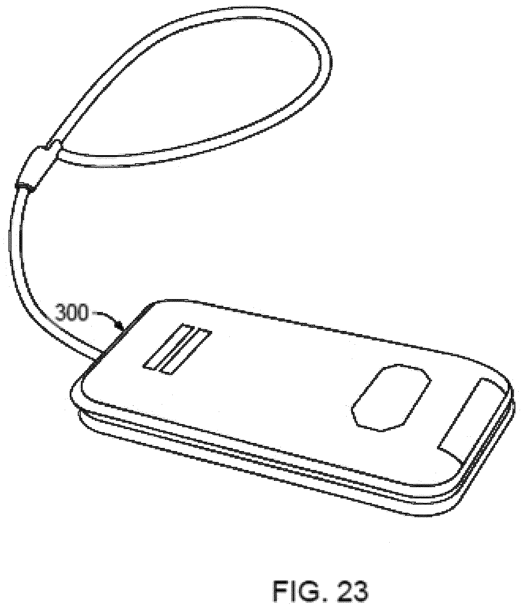

Although the present disclosure is generally described as relating to a mobile accessory, in another embodiment some or all of the components of the mobile accessory described above may be included in a standalone personal safety device (see, e.g., FIG. 23). In other words, a personal safety device may be configured for use without requiring a separate mobile phone. In this regard, the personal safety device may be configured to communicate with cellular networks and configured to determine a location of the personal safety device. Thus, for example, the communication interface may be configured to communicate with cellular or satellite networks in order to allow for transmission of electronic communications and the personal safety device may further include a GPS sensor configured to determine the location of the personal safety device.

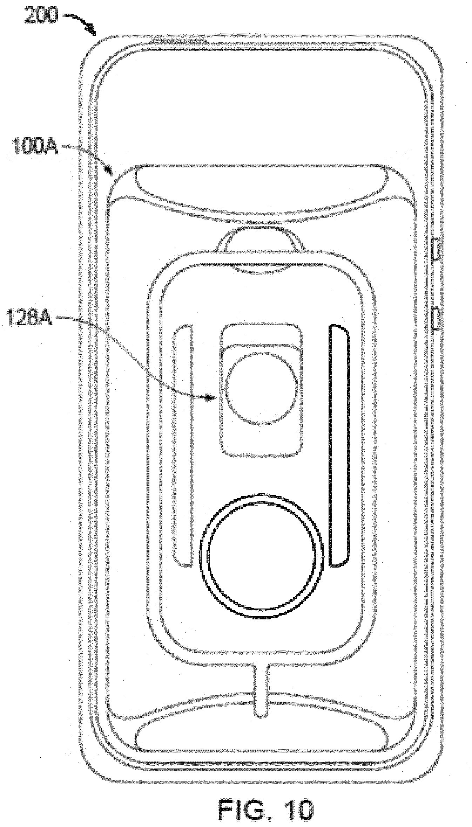

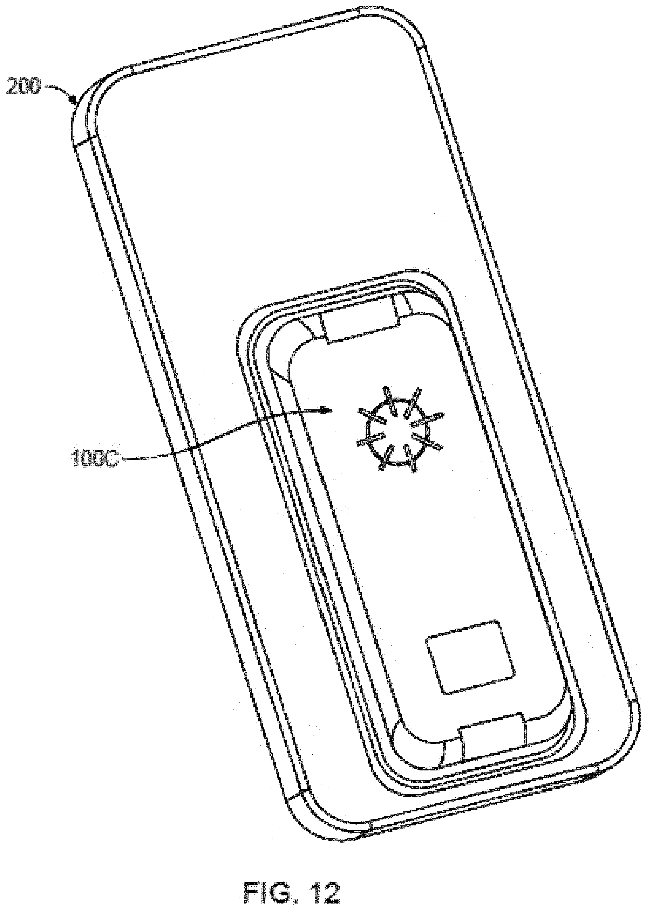

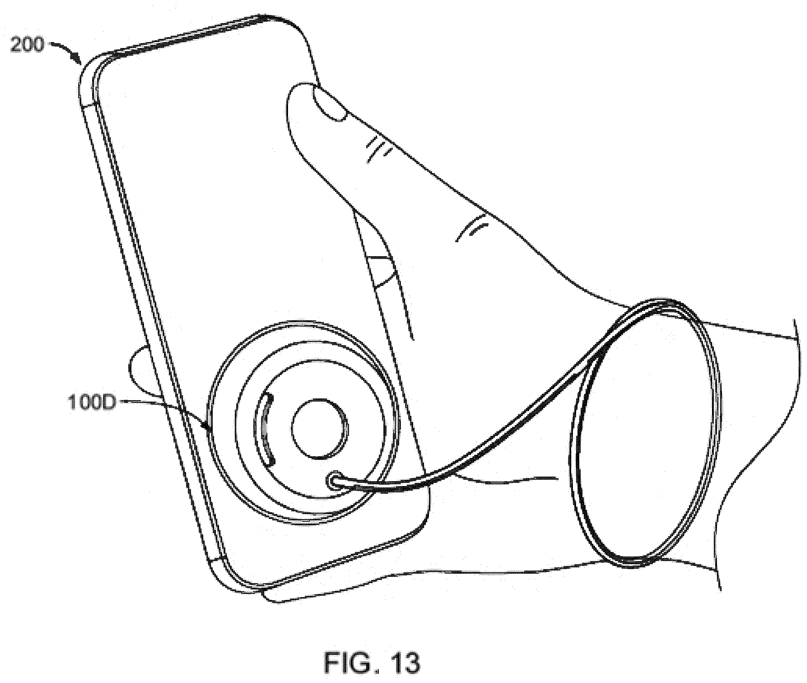

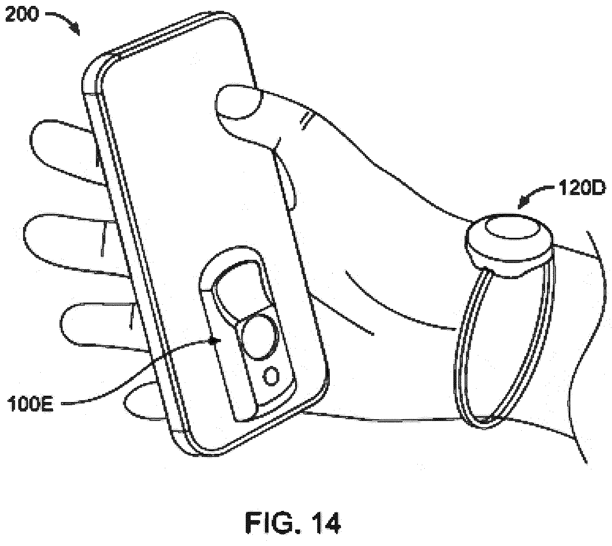

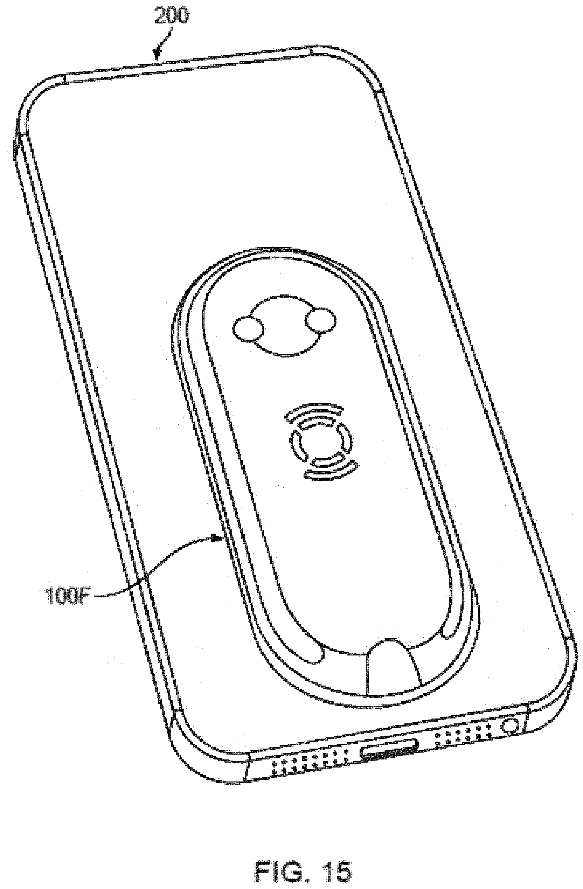

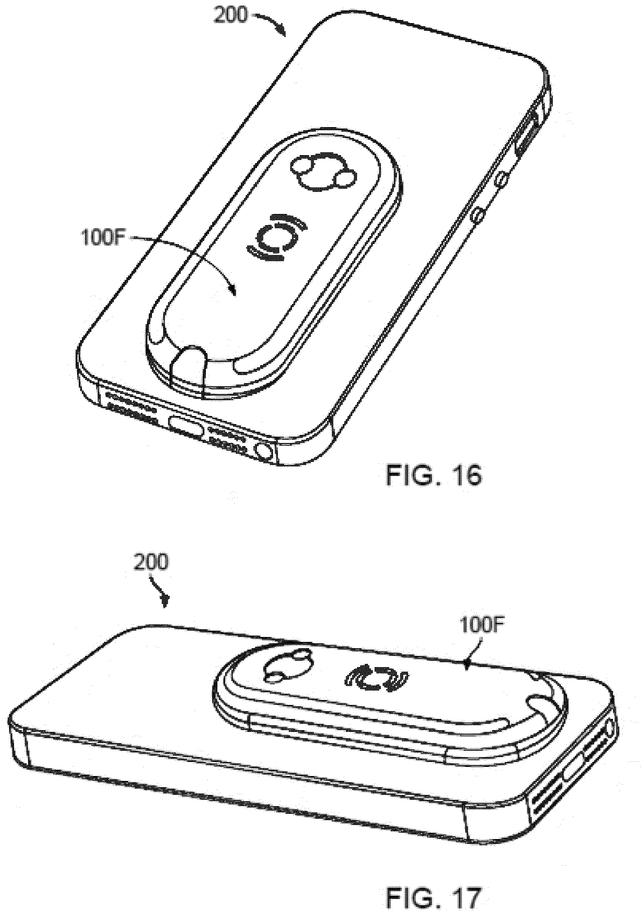

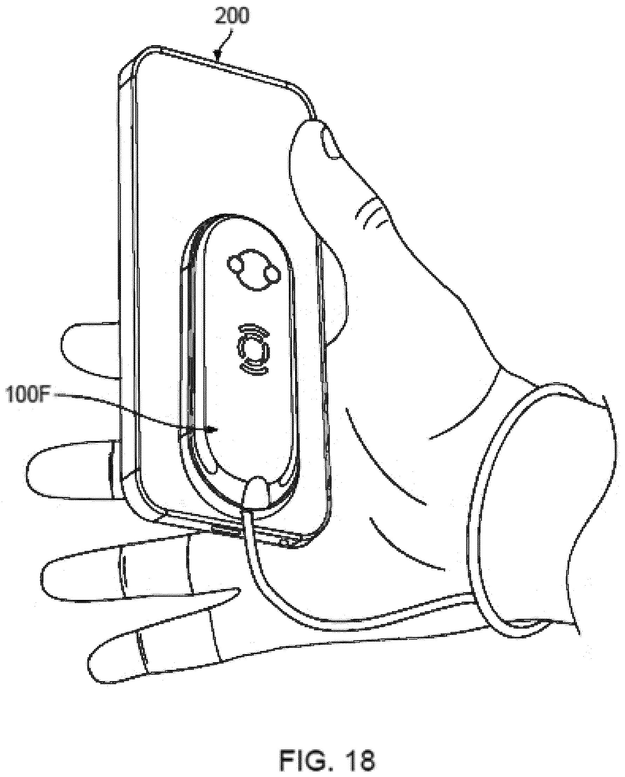

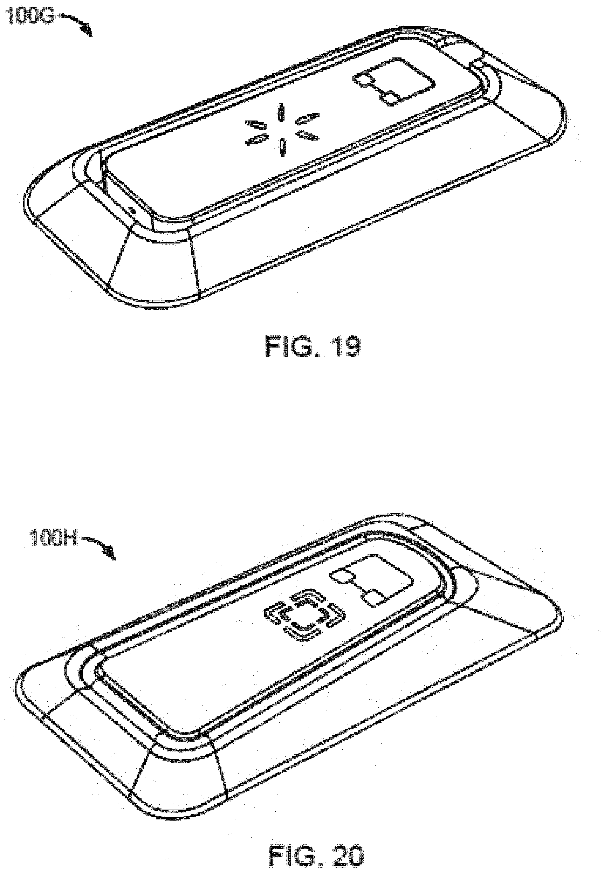

As noted above, the form factor of the mobile accessory device 100 may vary. In this regard, FIG. 10 illustrates an embodiment of the mobile accessory device 100A including the switch 128 of FIG. 8. FIG. 11 illustrates an embodiment of the mobile accessory device 100B provided in the form of a case. FIG. 12 illustrates an embodiment of the mobile accessory device 100C wherein the mobile accessory is substantially rectangular with rounded corners. FIG. 13 illustrates an embodiment of the mobile accessory device 100D wherein the mobile accessory is round. FIG. 14 illustrates an embodiment of the mobile accessory device 100E wherein the user separation sensor arrangement includes a wireless wearable component 120D. FIGS. 15-18 illustrate an embodiment of the mobile accessory device 100F wherein the mobile accessory is ovular. FIG. 19 illustrates an embodiment of the mobile accessory device 100G wherein the wearable component of the user separation sensor arrangement is not attached for illustration purposes. FIG. 20 illustrates an embodiment of the mobile accessory device 100H wherein a mobile phone is not attached for illustration purposes. FIG. 21 illustrates an embodiment of the mobile accessory device 1001 wherein the mobile accessory is attached to a case 208 for the mobile phone 200.

In examples such as the mobile accessory device 100E and the wearable component 120D of FIG. 14, the connection between the wearable component 120D and the mobile accessory device 100E may be wireless. For example, the connection may be a radio frequency connection (e.g., BLUETOOTH connection), a photonic connection (e.g., infrared beacon, IrDA), sonic (e.g., ultrasonic beacon), or magnetic (e.g., a Hall sensor in the mobile accessory device activated when a magnet in the wearable component or the mobile phone is moved too far away).

In some embodiments, the user separation sensor arrangement 118 can be configured to measure or otherwise detect a strength of a wireless signal provided by the wearable component. The strength of the signal can be proportional or otherwise representative of the distance between the wearable component and the user separation sensor arrangement 118 (e.g., the larger the separation distance, the weaker the received signal will be). The user separation sensor arrangement 118 can compare the strength of the received signal to a predetermined threshold signal strength value. If the received signal strength is determined to be less than the threshold signal strength value, the user separation sensor arrangement 118 can provide an activation signal to the controller 112. In some embodiments, the user separation sensor arrangement 118 may be configured to detect the presence and/or absence of a beacon signal, and the threshold signal strength value can be a timeout value. For example, the wearable component 120D can be configured to emit a beacon signal once every second, and the threshold signal strength value can be set to five seconds. In this example, the user separation sensor arrangement 118 can determine that no beacon signal has been received for at least five seconds, and respond by determining that the wearable component 120D is no longer in proximity (and/or physically attached) to the mobile accessory device 100E and provide an activation signal to the controller 112.

FIGs. 22A-F illustrate steps associated with usage of a wearable component 120I (e.g., a wrist strap) of the mobile accessory device 1001 of FIG. 21. FIG. 22A shows a mobile phone 200 having an attached (e.g., adhesively, with tabs/slots, or hooks and loops) mobile accessory device 1001. The microphone of the mobile phone 200 is shown at 208. The mobile accessory device 1001 includes a groove 209 defined in the surface of the mobile accessory device 1001, sized to accommodate storage of the wearable component 1201. FIGs. 22B-D show a user in the process of removing the wearable component 1201 from the groove 209 so that he or she can engage the wearable component 1201 into a worn position, such as shown in FIG. 22E (e.g., donned upon a wrist). FIG. 22F illustrates how the user might hold mobile phone 200 after he or she has removed wearable component 1201 form the groove 209 and put it around his or her wrist. The user can later remove (e.g., doff) the wearable component 1201 and stow it in the groove 209.

FIG. 23 illustrates an embodiment of a personal safety device 300 that does not require usage of a separate mobile phone, but rather is implemented as a standalone, dedicated personal safety device. Such a personal safety device 300 may have sufficient components and functionalities to perform the operation

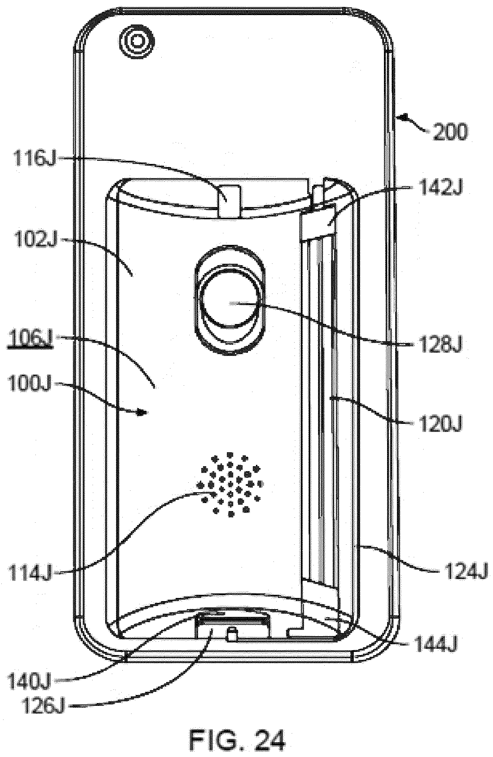

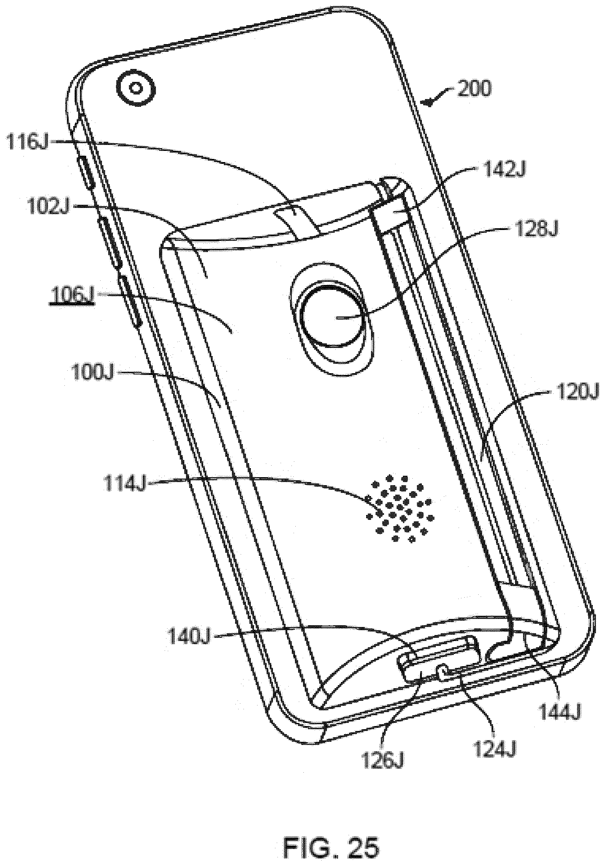

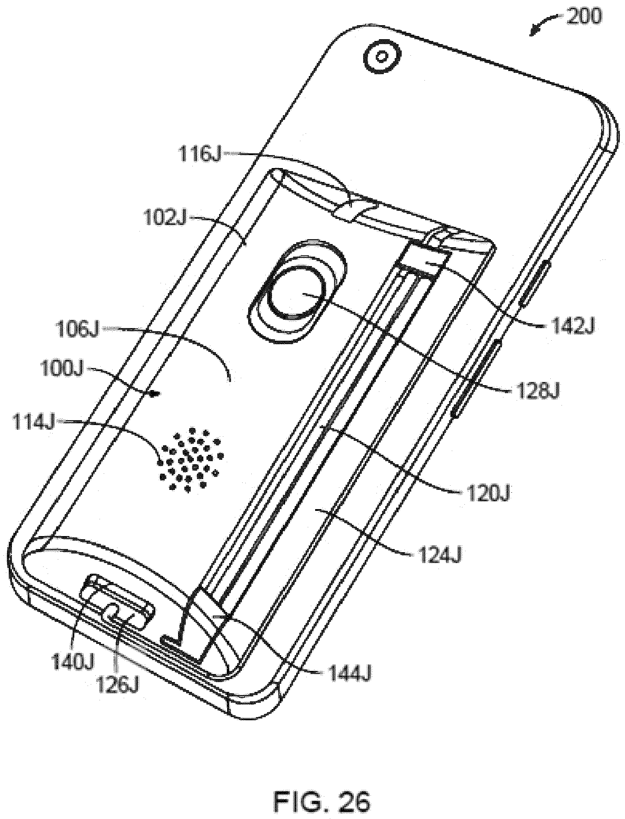

Further, FIGS. 24-26 illustrate an embodiment of the mobile accessory device 100J according to an additional example embodiment of the present disclosure. The mobile accessory device 100J is illustrated as being attached to the mobile phone 200 as discussed above. The overall configuration and features of the mobile accessory device 100J may be substantially similar to that of the mobile accessory device 100 of FIG. 1. However, the mobile accessory device 100J of FIGS. 24-26 may vary in one or more respects.

For example, as illustrated, the position of the components of the mobile accessory device 100J relative to the housing 102J may vary. In this regard, the light output device 116J may be positioned at a top center of the outer surface 106J of the housing 102J. This configuration may allow the light output device 116J to be exposed and visible above the top of the user's hand in the event of activation while in the user's hand, such that it is more noticeable. The audio output device 114J may be positioned in a similar location as compared to the audio output device 114 of the mobile accessory device 100 of FIG. 1, but the housing 102J may include a pattern of round holes defined there through that allow sounds to exit the mobile accessory device 100J. Further, the switch 128J may be substantially similar to the switch 128A described above with respect to FIG. 8, but the ends thereof may be relatively more rounded for improved ergonomics and/or appearance. Additionally, the battery portion may be positioned at the attachment surface of the mobile accessory device 100J engaged with the mobile phone 200 in order to de-clutter the exposed outer surfaces thereof.

Further, the mobile accessory device 100J may include a nail slot 140J, which may be positioned between the connector 126J and the housing 102J. In this regard, in some embodiments the user separation sensor arrangement may be activated by engaging a fingernail in the nail slot 140J and releasing the connector 126 rather than requiring the user to release the wearable component 120J first. Thereby, activation of the user separation sensor arrangement may be conducted quickly (e.g., in an unexpected dangerous situation), if necessary.

Further, the particular configuration of the wearable component 120J may differ. In this regard, as illustrated in FIGS. 24-26, in an un-extended configuration, the lanyard 124J may wrap around a lower comer of the housing 102J and extend to and wrap around a top comer of the housing. The wearable component 120J may then extend downward from the lanyard 124J to the bottom edge of the housing 102J. A clip 142J may be positioned at the interface between the lanyard 124J and the wearable component 120J. In some embodiments, the clip 142J may be moveable such that the relative length of the wearable component 120J relative to the lanyard 124J is adjustable and thereby a user may tighten the wearable component around his or her wrist during use. The clip 142J may be configured to engage the housing 102J when in an un-extended configuration to retain the lanyard 124J in place.

Further, the wearable component 120J may include a pull tab 144J at an end thereof. The pull tab 144J may retain the wearable component 120J in the un-extended configuration until the user releases the pull tab from engagement with the housing 102J. Releasing the pull tab 144J from engagement with the housing 102J may activate one or more features. For example, in response to the pull tab 144J being released, the positioning system sensor 210 (see, FIG. 7) may be instructed to activate via the communication mechanisms described above. Accordingly, when a user extends the wearable component 120J and places it on his or her wrist, for example when confronted with a dangerous situation or location, the user's location may be determined and tracked at that time. Thereby, in the event that the user pulls out the connector 126J, the positioning system sensor 210 will have already been activated in order to substantially immediately provide the user's location as described above. Thereby, for example, any delays associated with determining the user's location may be avoided. Further, the user's location may be tracked during the time period during which the pull tab 144J is released and thereby the user's location information may optionally be shared with one or more persons, if desired.

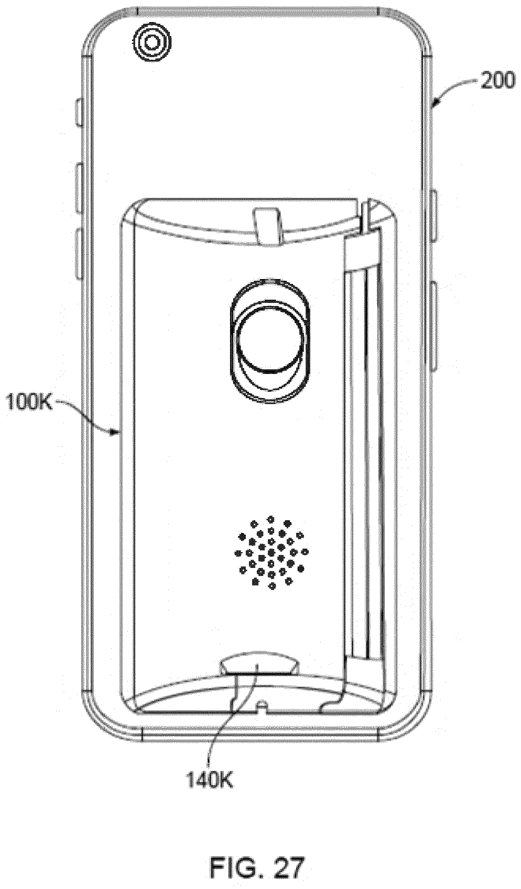

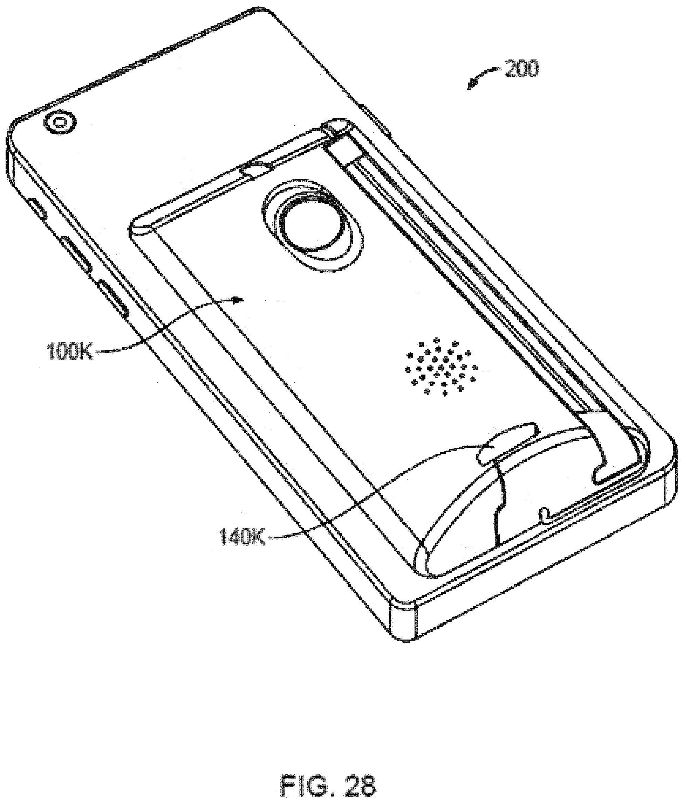

The embodiment of the mobile accessory device 100K illustrated in FIGS. 27 and 28 is substantially similar to the mobile accessory of FIGS. 24-26 in most respects and hence the configuration thereof will not be repeated. However, the nail slot 140K is enlarged.

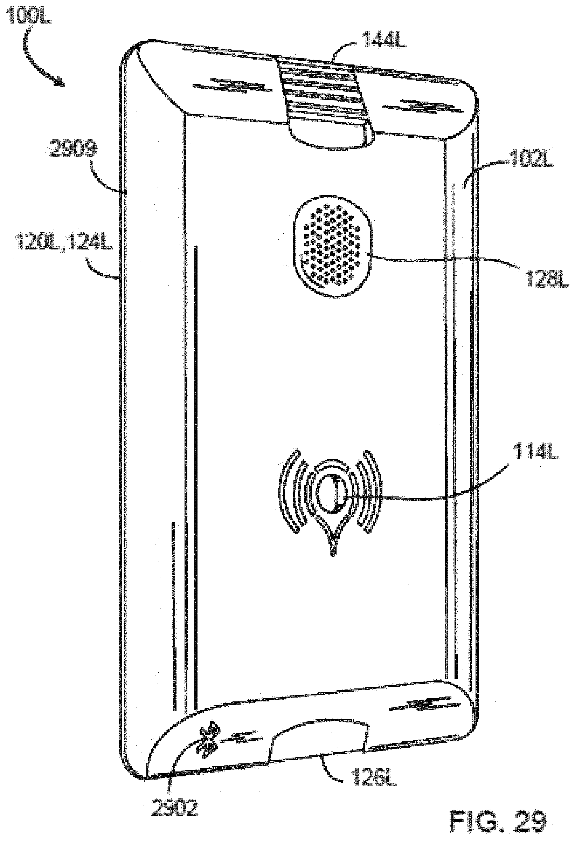

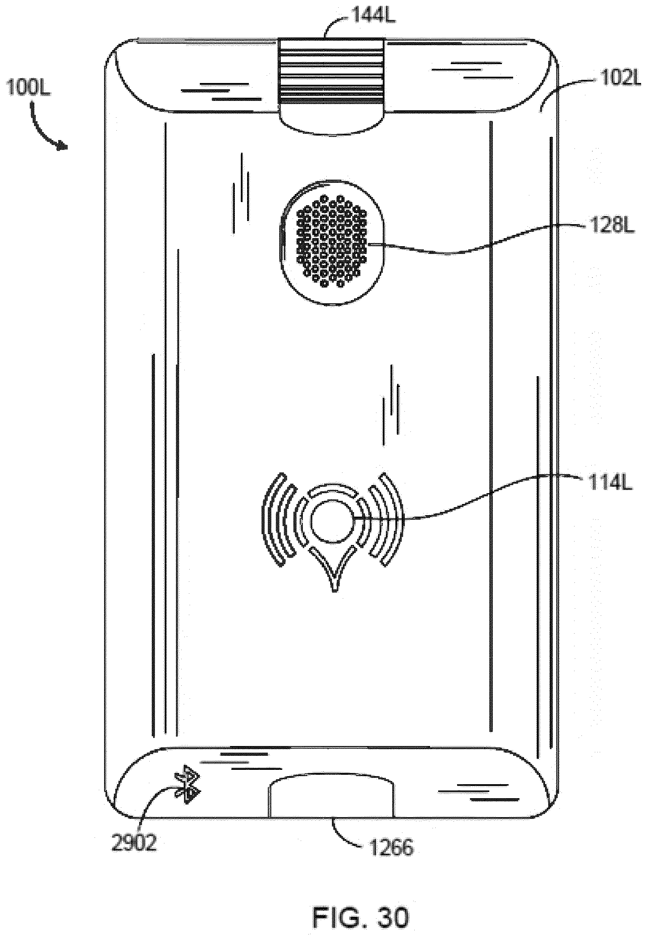

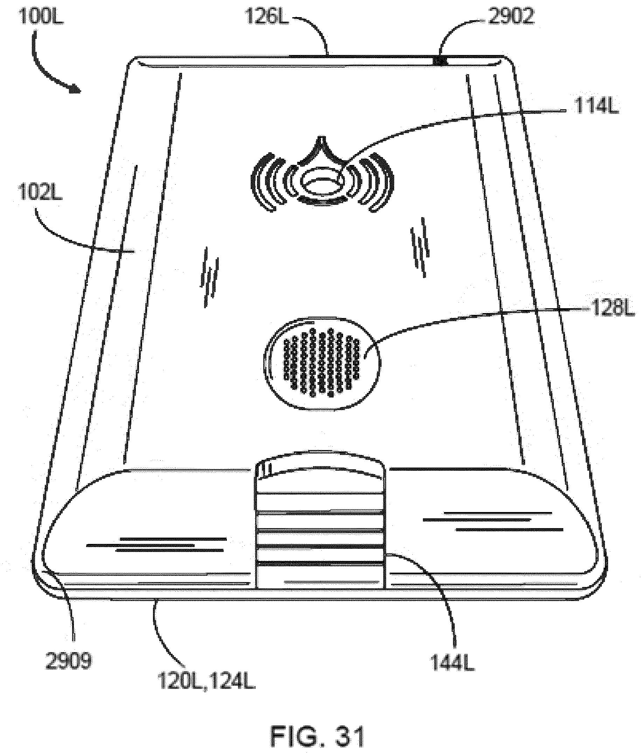

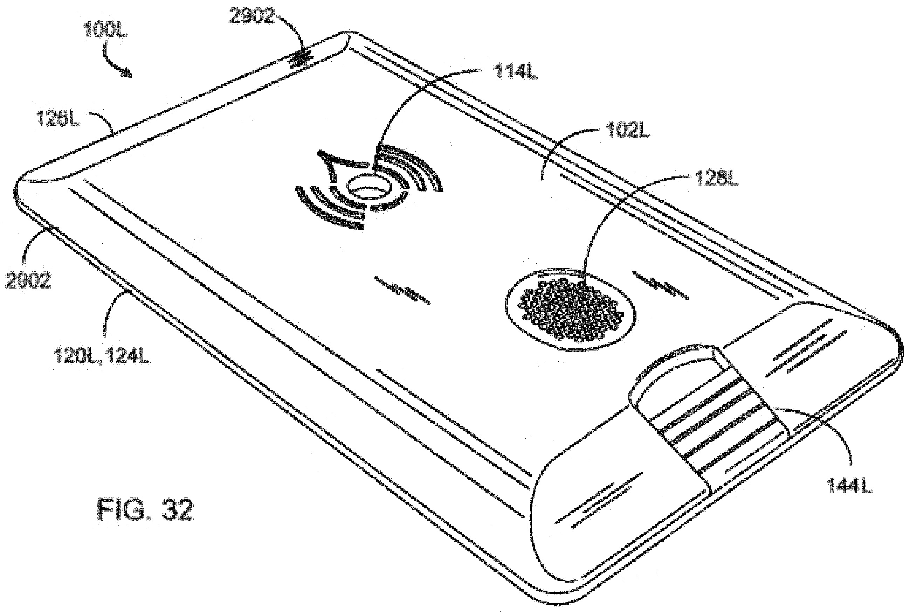

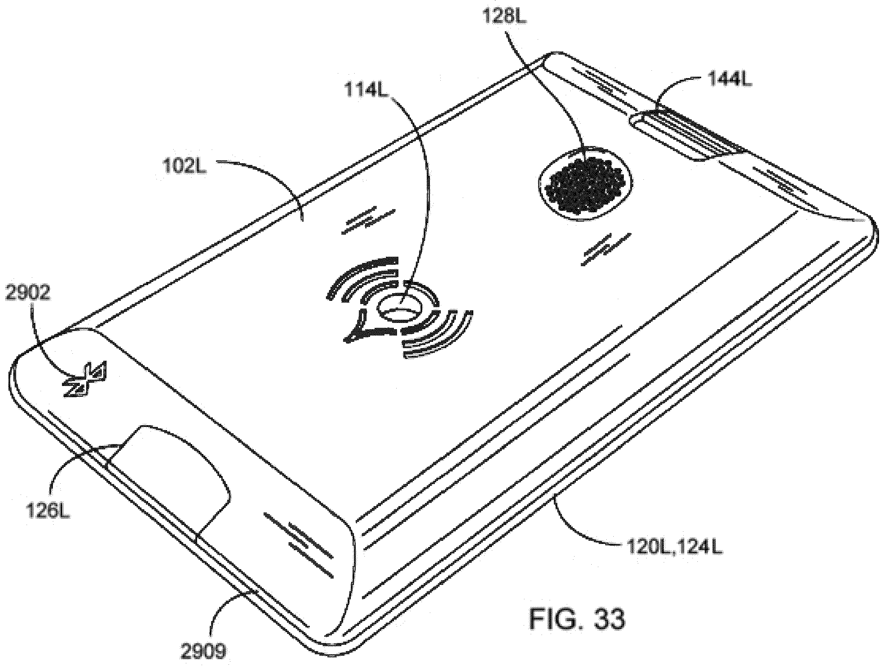

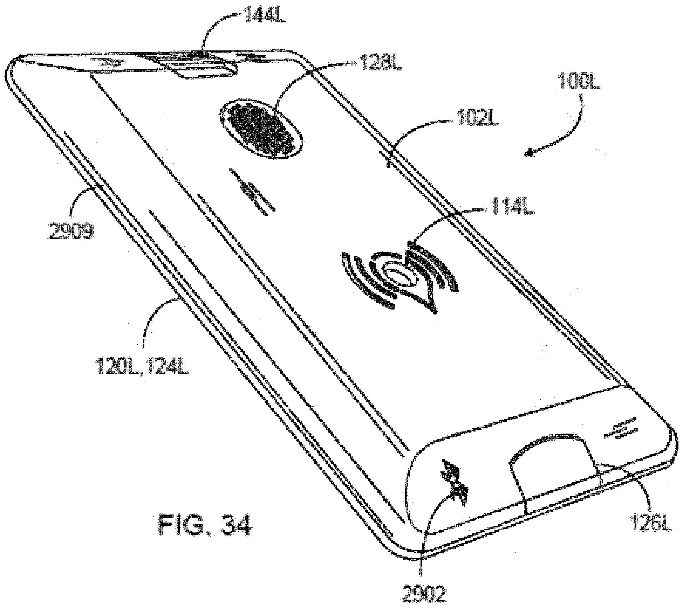

FIGs. 29-35 illustrate various views of another example mobile accessory device 1001 according to an additional example embodiment of the present disclosure. The mobile accessory device 100L is configured to be attached to the mobile phone 200 as will be discussed further below. The overall configuration and features of the mobile accessory device 100L may be substantially similar to that of the mobile accessory device 100 of FIG. 1. However, the mobile accessory device 100L of FIGS. 29-35 may vary in one or more respects.

For example, as illustrated, the position of the components of the mobile accessory device 100L relative to the housing 102L may vary. The audio output device 114L may be positioned in a similar location as compared to the audio output device 114 of the mobile accessory device 100 of FIG. 1, but the housing 102L may include a round hole defined there through that allow sounds to exit the mobile accessory device 100L.

Further, the particular configuration of the wearable component 120L may differ. In this regard, as illustrated in FIGS. 29-35, in an un-extended configuration, wearable component 120L and the lanyard 124L may be stow-able in a groove 2909 formed about the periphery of the housing 102L. Further, the wearable component 120L may include a pull tab 144L at an end thereof. The pull tab 144L may retain the wearable component 120L in the stowed (e.g., un-extended) configuration until the user releases the pull tab 144L from engagement with the housing 102L. Releasing the pull tab 144L from engagement with the housing 102L may activate one or more features. For example, in response to the pull tab 144L being released, the positioning system sensor 210 (see, FIG. 7) may be instructed to activate via the communication mechanisms described above. Accordingly, when a user removes the wearable component 120L from the groove 2909 and places it on his or her wrist, for example when confronted with a dangerous situation or location, the user's location may be determined and tracked at that time. Thereby, in the event that the user pulls out the connector 126L, the positioning system sensor 210 will have already been activated in order to substantially immediately provide the user's location as described above. Thereby, for example, any delays associated with determining the user's location may be avoided. Further, the user's location may be tracked during the time period during which the pull tab 144L is released and thereby the user's location information may optionally be shared with one or more persons, if desired.

Further, the switch 128L may be a pressure sensitive or membrane switch defined as a fingertip-sized recess having a textured pattern (e.g., to ease identification and location of the switch 128L by either sight or touch). In use, the switch may be used to activate an alarm though a predetermined continuous press (e.g., three seconds) or through a predetermined series of presses (e.g., three presses within five seconds), for example, to reduce the occurrence of accidental activation. In some implementations, the switch 128L may activate a different type of alarm than may be triggered by separation of the lanyard. For example, the mobile accessory device 100L may respond to activation of the switch 128L by initiating a silent alarm to alert one or more predetermined recipients (e.g., discretely sending a message to a preselected contact), while the mobile accessory device 100L may respond to separation of the connector 126L by initiating an audible alarm and alerting one or more predetermined recipients (e.g., set off a siren and send a message or place a phone call to police).

Further, the mobile accessory device 100L may include a nail slot positioned between the connector 126L and the housing 102L. In this regard, in some embodiments the user separation sensor arrangement may be activated by engaging a fingernail in the nail slot and releasing the connector 126L rather than requiring the user to release the wearable component 120L first. Thereby, activation of the user separation sensor arrangement may be conducted quickly (e.g., in an unexpected dangerous situation), if necessary.

The mobile accessory device 100L also includes a visual indicator 2902 (e.g., a light, a display). The visual indicator 2902 is configured to provide a visible indication of one or more statuses of the mobile accessory device. For example, the visual indicator 2902 may blink at a first rate or pattern (e.g., or illuminate steadily), illuminate at a first brightness, and/or illuminate with a first color to display a first condition (e.g., to indicate that the mobile accessory device 100L is connected to or paired with the mobile phone 200 and/or an associated alarm software application running on the phone), and blink, illuminate, and/or colorize in different predetermined manners to display other conditions (e.g., to indicate that the mobile accessory device 100L is not paired or otherwise communicatively associated with mobile phone 200, to indicate that the mobile accessory device 100L is not able to communicate with the mobile phone 200 to which it was previously paired or otherwise communicatively associated). In some embodiments, the visual indicator 2902 may display differently shaped predetermined patterns to indicate different conditions of the mobile accessory device 100L. For example, the visual indicator 2902 may appear as a periodically blinking, blue BLUETOOTH symbol to indicate that the mobile accessory device 100L is ready for pairing, and may appear as a red "X" when the mobile accessory device 100L is not able to communicate with the paired mobile phone 200 or an associated software application installed thereupon and configured to respond to alarm signals from the mobile accessory device 100L.

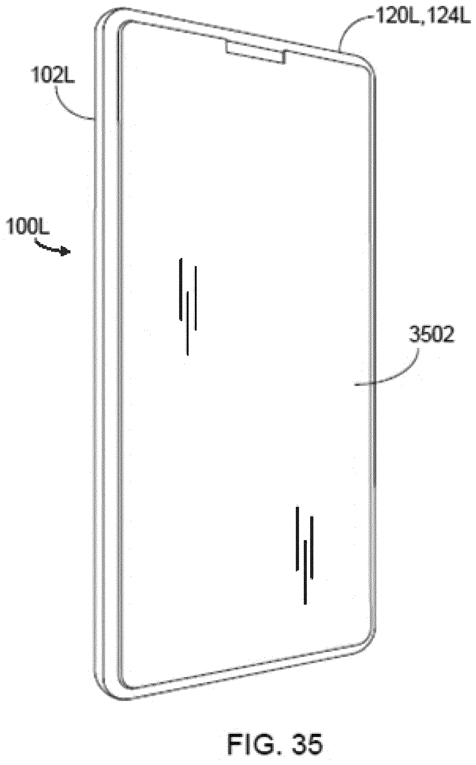

Referring now to FIG. 35, a rear perspective view of the mobile accessory device 100L is shown. The rear side of the housing 102L includes an adhesive pad 3502. In use, the adhesive pad 3502 can be contacted against a surface of the mobile phone 200 (e.g., the rear surface 202).

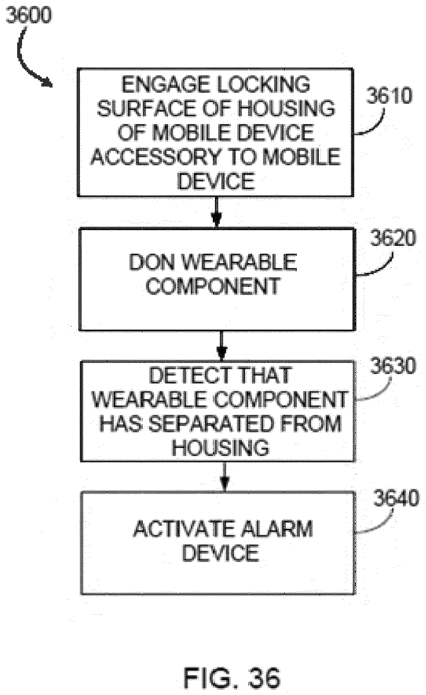

FIG. 36 is a flow chart of an example process 3600 for using an example mobile accessory device. In some implementations, the process 3600 can be performed using one or more of the example mobile device accessories 100A-100L of FIGs. 1-23, and 25-35, and the personal safety device 300 of FIG. 23.

At 3610, an attachment surface of a housing of a mobile accessory device is engaged to a mobile device. For example, the attachment surface 104 of the housing 102 may be configured to engage the rear surface 202 of the mobile phone 200. In another example, the adhesive pad 3502 shown in FIG. 35 can be used to secure the mobile accessory device 100L to a mobile device, such as to the rear surface 202 of the mobile phone 200.

At 3620, a wearable component is donned upon a user of the mobile device. For example, the wearable component 120 of FIG. 5, the wireless wearable component 120D of FIG. 14, and/or the wearable component 1201 of FIGs 22A-F can be worn about a user's wrist. In other examples, the wearable component can donned upon or otherwise carried by a user (e.g., a pendant, a ring, an earring, an earpiece, bracelet, wristwatch, eyeglass frame, hair clip), the user's clothing (e.g., a remote unit carried in the user's pocket, a pin, a badge, clipped to a belt, a belt buckle, head band, hat), and/or the user's personal effects (e.g., a remote unit carried in purse or bag, a key fob, an identification card).

At 3630, a separation sensor detects that the wearable component has separated from the housing. For example, the user input sensor 122 can determine that the wearable component 120 has exceeded a threshold separation distance from the controller 112 and/or that the wearable component 120 has become physically detached from the mobile accessory device 100.

In some embodiments, the process 3600 can include detecting a mechanical separation of the housing and a lanyard affixed to the wearable component, the lanyard having a predetermined length and mechanically connecting the wearable component to the housing, the lanyard being mechanically separable from the housing when distance between the wearable component and the housing exceeds the predetermined length. For example, the user input sensor 122 can determine that the wearable component 120 has become detached, disengaged, or otherwise physically separated from the controller 112.

In some embodiments, detecting that the wearable component has separated from the housing can include determining a signal strength of a wireless tether signal transmitted by a wireless transmitter of the wearable component to a wireless receiver arranged within the housing and in communication with the separation sensor, the signal strength being representative of a distance between the wearable component and the housing, and determining that the signal strength is less than or equal to a predetermined signal strength defining a predetermined separation distance. For example, the user separation sensor arrangement 118 can determine that the wearable component 120D has exceeded a threshold separation distance from the controller 112, or that a periodic beacon transmitted by the wearable component 120D has not been received for a predetermined length of time.

At 3640, an alarm device is activated based on detecting that the wearable component has separated from the housing. For example, the controller 112 of FIG. 7 can be activated. In some embodiments, activating the alarm device can include transmitting an alarm signal; and wherein the process 3600 can also include receiving, by mobile device, the alarm signal, and sending, by the mobile device and in response to the receiving the alarm signal, a predetermined communication to one or more predefined recipients. For example, the controller 112 of FIG. 7 can activate the communication interface 134 to communicate with the mobile phone 200. The mobile phone 200 may have a software application installed and executing thereupon, and the software application can be configured to react to the communication from the mobile accessory device 100E to cause the mobile phone to communicate with one or more predetermined recipients. For example, the software application may be configured to initiate a call, send a text message, email, media file, media stream, location information (e.g., GPS data), captured audio and/or video, or any other appropriate information to one or more contacts previously identified by the user (e.g., family member, friend, neighbor, doctor, nurse, caregiver, welfare official, emergency services, 911)

In some embodiments, activating the alarm device can include activating an audio output component disposed within the housing and configured to emit an audible alert when activated. For example, the controller 112 includes the audio output device 114 that can emit a siren, noise, prerecorded or synthesized spoken words or other sounds, or any other appropriate sound that is sufficiently loud enough to attract the attention of other nearby persons and/or repel an attacker. In some embodiments, activating the alarm device can include activating a visual output configured to emit an audible alert when activated. For example, the controller 112 includes the light output device 116 that can emit a light or strobe to attract the attention of other nearby persons and/or repel an attacker.

In some embodiments, the process 3600 can include removing the wearable component from a cavity defined by the housing, wherein the cavity is sized to accommodate storage of the wearable component. For example, FIGs. 22A-22F show that the example wearable component 1201 can be at least partly removed from the mobile accessory device 1001 before being worn about the wrist of the user. In some embodiments, the process 3600 can also include doffing the wearable component from the user, and stowing the wearable component in a cavity defined by the housing, wherein the cavity is sized to accommodate storage of the wearable component. For example, the process illustrated by FIGs. 22A-22F can be reversed such that the user can take the wearable component 1201 or 120L off his or her wrist, and placed back in the groove 209 or 2909 defined in the housing of the mobile accessory device 1001 or 100L.

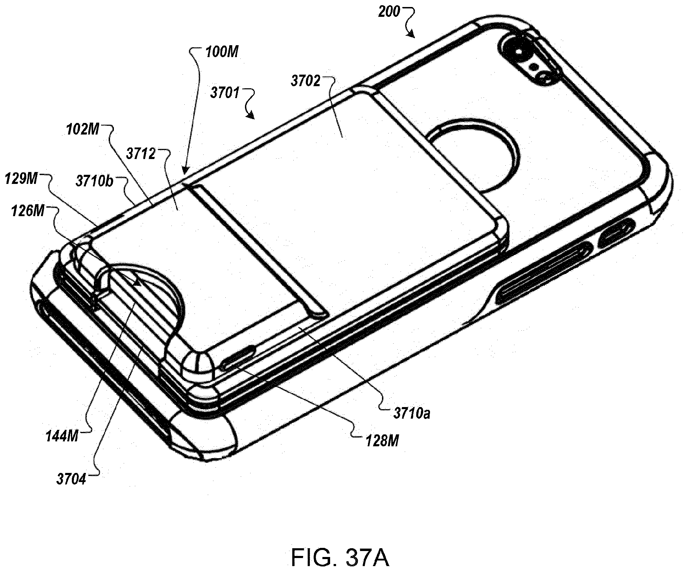

FIGs. 37a-45 illustrate various views of another example mobile accessory device 100M according to an additional example embodiment of the present disclosure. The mobile accessory device 100M is configured to be attached to the mobile phone 200, either directly or indirectly, as will be discussed further below. The overall configuration and features of the mobile accessory device 100M may be substantially similar to, or a subset of, that of the mobile accessory device 100 of FIG. 1. However, the mobile accessory device 100M of FIGS. 37a-45 may vary in one or more respects.

The mobile accessory device 100M includes a user input sensor having a movable component 144M (e.g., a pull tab), which serves as a user input mechanism, and is configured to activate when the movable component 144M is at least partially moved, and an alarm device (not shown) disposed in the housing 102M and configured to activate in response to activation of the user input sensor. Activation of the alarm device can cause an audible alarm, or cause a software application to be executed on the mobile phone 200, or both. The audible alarm can come either from an optional audio emitting device disposed in the mobile accessory device 100M or (e.g., in embodiments where the mobile accessory device 100M does not include an audio emitting device) from the mobile phone 200, e.g., using a speaker built into the mobile phone 200.

For example, as illustrated, the position of the components of the mobile accessory device 100M relative to a housing 102M may vary. A pull tab 144M is configured to remain in a stowed (e.g., un-extended) configuration until the user releases the pull tab 144M from engagement with the housing 102M or moves the pull tab 144M relative to the housing 102M. Releasing or moving the pull tab 144M may activate one or more features. For example, in response to the pull tab 144M being moved, removed (at least in part), shifted, or released, the positioning system sensor 210 (see, FIG. 7) may be instructed to activate via the communication mechanisms described above. Further, the user's location may be tracked, e.g., using GPS-like functionality built into the mobile phone 200, during the time period in which the pull tab 144M is released and thereby the user's location information may optionally be shared with one or more persons, if desired, e.g., using the communications capabilities of the mobile phone 200 (e.g., phone, email, SMS text).

Further, the mobile accessory device 100M may include a slot 126M or a feature providing equivalent functionality, positioned between the pull tab 144M and the housing 102M. In this regard, in some embodiments the user separation sensor arrangement may be activated, for example, by engaging a fingernail or equivalent in the slot 126M and moving the pull tab 144M. Thereby, based on user input, activation of the user separation sensor arrangement may be conducted quickly (e.g., in an unexpected dangerous situation), if necessary, for example, by moving (at least in part) the pull tab 144M.

In some embodiments, the slot 126M, which serves as a user input mechanism, may be supplemented or substituted with one or more other mechanical features configured to provide frictional, grippable, or graspable surface or element to ease releasing or moving the pull tab 144M. Examples of such mechanical features can include raised or recessed ribs, dimples, latches, loops, hooks, projections, textures (e.g., rough, soft, sticky), or combinations of these or other mechanical features that can promote manual operation (e.g., movement or removal) of the pull tab 144M.

Alternatively, or in addition, other use input mechanisms (e.g., switches or buttons) may be used as a user input mechanism to trigger actuation of the mobile accessory device 100M. In one such embodiment, a switch 128M (e.g., a button) is arranged on a lateral side 3710a of the housing 102M, substantially perpendicular to a major face surface 3712. Another switch 129M is arranged on a lateral side 3710b of the housing 102M, substantially perpendicular to the major face surface 3712 opposite the switch 129M. The switch 128M and/or the switch 129M may be a depressible button, pressure sensitive, or membrane switches defined as a fingertip-sized recess or protrusion having a textured pattern (e.g., to facilitate identification and location of the switch by either sight or touch). In use, the switch 128M and the switch 129M are pressed substantially simultaneously. For example, in the illustrated configuration, a user can squeeze the switch 128M and the switch 129M with two different fingers of one hand in order to activate an alarm, thereby reducing a likelihood of false alarms due to accidental actuation of a single button. The switches may be used to activate an alarm though a predetermined continuous press (e.g., three seconds), through a predetermined series of presses (e.g., three presses within five seconds), or through a particular sequence of presses (e.g., first pressing the switch 128M and then the switch 129M), for example, to reduce the occurrence of accidental activation.

In some implementations, the switches 128M and 129M may activate a different type of action than may be triggered by separation of the pull tab 144M. For example, the mobile accessory device 100M may respond to activation of the switches 128M and 129M by initiating a silent alarm to alert one or more predetermined recipients (e.g., causing the mobile phone 200 to discretely send a message to a preselected contact), while the mobile accessory device 100M may respond to movement or partial removal of the pull tab 144M by initiating an audible alarm and alerting one or more predetermined recipients (e.g., set off a siren and send a message or place a phone call to police). The audible alarm can come either from an optional audio emitting device disposed in the mobile accessory device 100M or (e.g., in embodiments where the mobile accessory device 100M does not include an audio emitting device) from the mobile phone 200, e.g., using a speaker built into the mobile phone 200.

In some embodiments, the movable component (e.g., pull tab 144M) can be configured to be at least partly moved relative to the housing 102M when subjected to a predetermined force. In some embodiments, the mobile accessory device 100M can include a wearable component having a lanyard (e.g., the example wearable component 120) configured to mechanically attach to the housing 102M and/or the pull tab 144M and provide at least the predetermined force to the movable component based on a pull of upon the lanyard and at least partly move the movable component relative to the housing 102M based on the pull.

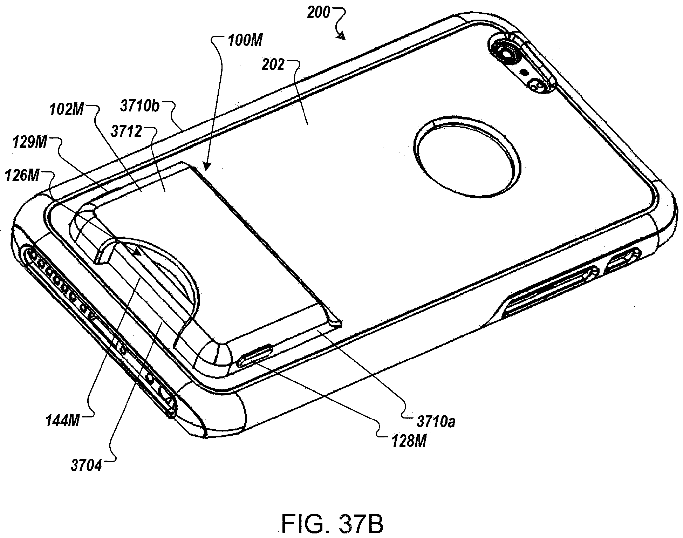

FIG. 37b shows the mobile accessory device 100M adhered or affixed to a companion mobile accessory device 3701 (e.g., a wallet for holding identification cards, credit cards, cash, or the like) which in turn is adhered or affixed to the mobile phone 200. However, the mobile accessory device 100M can be adhered or affixed directly to the mobile phone 200 without the need for, or use of, the companion mobile accessory device 3701.

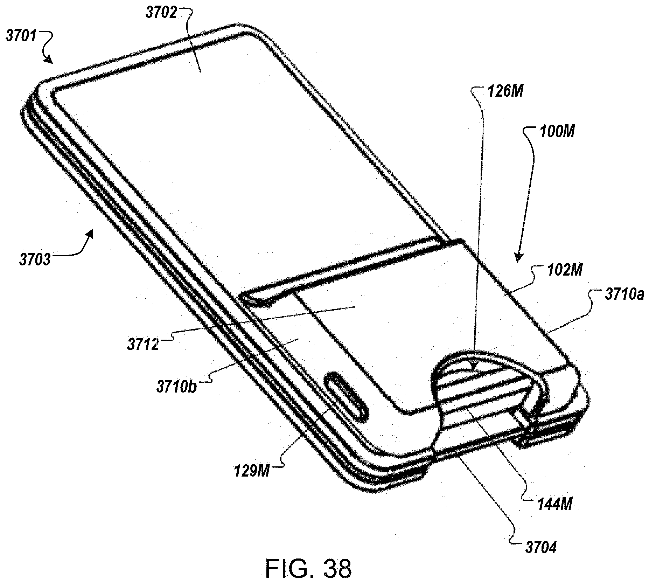

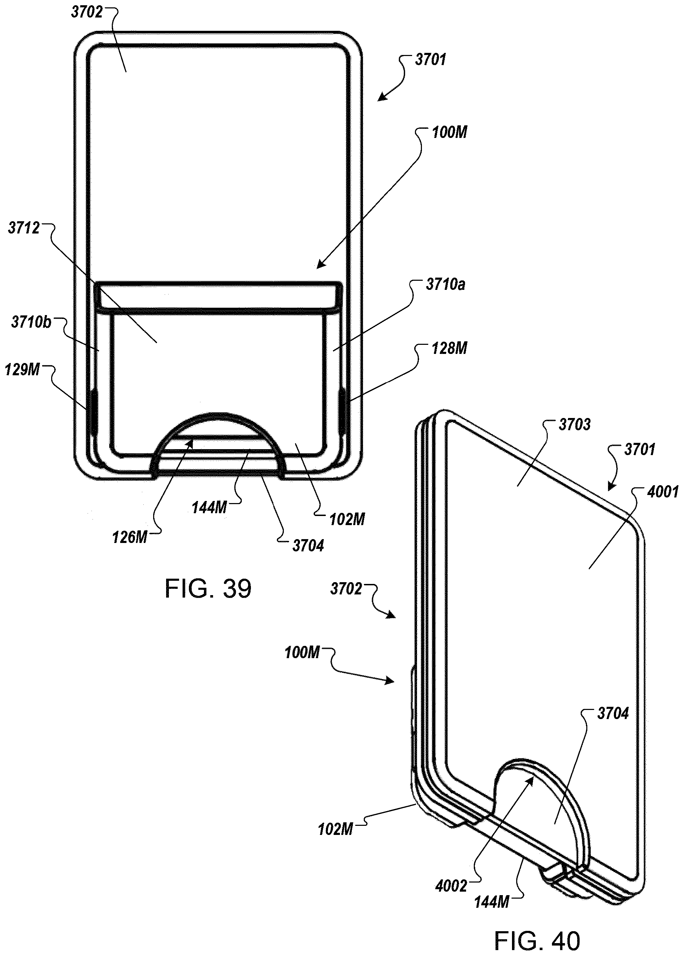

FIGs. 38-39 show the mobile accessory device 100M attached to the companion mobile accessory device 3701 without the mobile phone 200, whereas FIG. 40 shows the companion mobile accessory device 3701 alone.

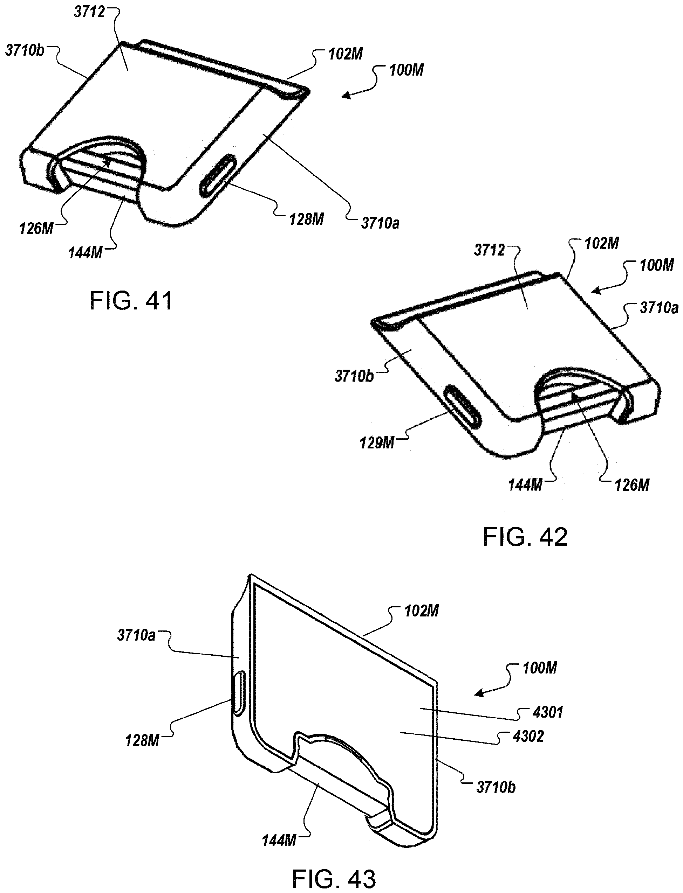

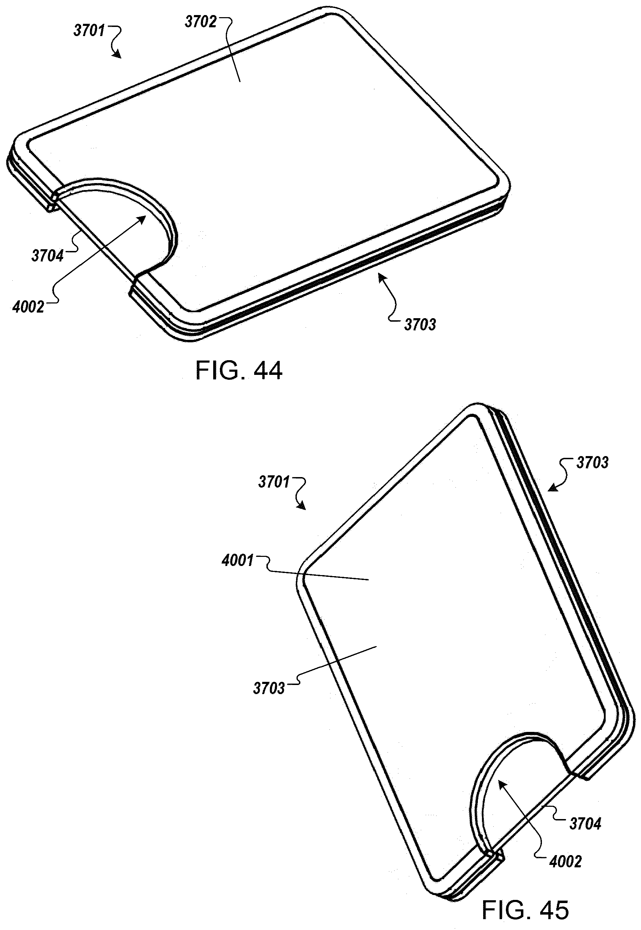

FIGs. 41-43 show the mobile accessory device 100M separate from the companion mobile accessory device 3701. In some implementations, the mobile accessory device 100M can engage (e.g., adhere to) a portion of the mobile phone 200. In some implementations, the mobile accessory device 100M can engage a portion of a companion mobile accessory device 3701 (which will be discussed further in the description of FIGs. 44-45). In some embodiments, the mobile accessory device 100M and the companion mobile accessory device 3701 may be configured as two physically independent components that may be adhered or otherwise mechanically engaged to each other or may be used independently. In some embodiments, the mobile accessory device 100M and the companion mobile accessory device 3701 may be configured as a combined unit (e.g., formed as a monolithic, unitary assembly having a shared housing).

Referring now to FIG. 43, a rear perspective view of the mobile accessory device 100M is shown. A major face 4302 of the rear side of the housing 102M includes an adhesive pad 4301. In use, the adhesive pad 4301 can be contacted against (e.g., adhered to) a surface of the mobile phone 200 (e.g., the rear surface 202), or the surface 3702 of the companion mobile accessory device 3701, or any other appropriate surface.

Referring now to FIGs. 40 and 45, rear perspective views of the companion mobile accessory device 3701 is shown. A rear side 3703 of the companion mobile accessory device 3701 includes an adhesive pad 4001. In use, the adhesive pad 4001 can be contacted against a surface of the mobile phone 200 (e.g., the rear surface 202), or any other appropriate surface.

Referring now primarily to FIGs. 36-40, 44, and 45, the companion mobile accessory device 3701 is shown. The companion mobile accessory device 3701 has a housing that defines a cavity 4002. The cavity 4002 is configured to removably retain one or more wallet-sized cards 3704, such as credit cards, identification cards (e.g., driver's license), loyalty cards, security access cards, folded cash, or any other appropriately sized items.

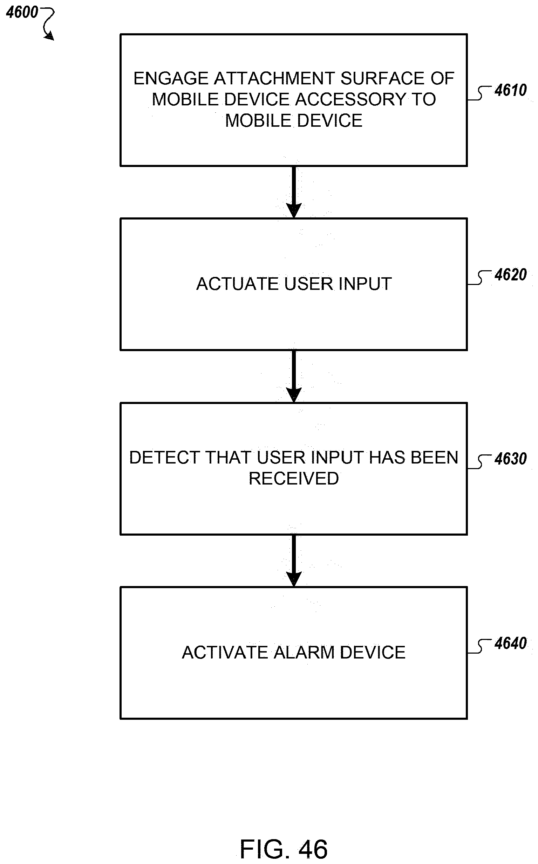

FIG. 46 is a flow chart of an example process for using an example mobile accessory device. In some implementations, the process 4600 can be performed using one or more of the example mobile device accessories 100A-100L of FIGs. 1-23, and 25-35, the personal safety device 300 of FIG. 23, and the mobile accessory device 100M of FIGs. 37a-43.

At 4610, an attachment surface of a housing of a mobile accessory device is engaged to a mobile device. For example, the major face 4302 of the housing 102M may be configured to engage the rear surface 202 of the mobile phone 200. In another example, the adhesive pad 4301 shown in FIG. 43 can be used to secure (e.g., adhere) the mobile accessory device 100M to the companion mobile accessory device 3701.

At 4620, a user input is received. For example, one or a combination of the switches 128M, 129M may have been pressed by a user. In another example, the pull tab 144M may have been actuated or partly removed by a user.

At 4630, a separation sensor detects that, based on the received user input, the mobile accessory device 100M has been actuated. For example, the user input sensor 122 can determine that the pull tab 144M has been moved, removed (at least partially), released or shifted, or that the switch 128M and/or the button 129M has been pressed.

In some embodiments, the process 4600 can include detecting a mechanical separation of the housing and a lanyard affixed to a wearable component, the lanyard having a predetermined length and mechanically connecting the wearable component to the housing, the lanyard being mechanically separable from the housing when distance between the wearable component and the housing exceeds the predetermined length. For example, the pull tab 144M can be connected to the wearable component 120, and the user input sensor 122 can determine that the wearable component 120 has caused the pull tab 144M to move or at be at least partly removed from the housing 102M.

At 4640, an alarm device is activated based on detecting that the user input has been actuated. For example, the controller 112 of FIG. 7 can be activated. In some embodiments, activating the alarm device can include transmitting an alarm signal; and wherein the process 4600 can also include receiving, by mobile device, the alarm signal, and sending, by the mobile device and in response to the receiving the alarm signal, a predetermined communication to one or more predefined recipients. For example, the controller 112 of FIG. 7 can activate the communication interface 134 to communicate with the mobile phone 200. The mobile phone 200 may have a software application installed and executing thereupon, and the software application can be configured to react to the communication from the mobile accessory device 100M to cause the mobile phone to communicate with one or more predetermined recipients, and/or to emit an audible alarm or other sound. For example, the software application may be configured to initiate a call, send a text message, email, media file, media stream, location information (e.g., GPS data), captured audio and/or video, or any other appropriate information to one or more contacts previously identified by the user (e.g., family member, friend, neighbor, doctor, nurse, caregiver, welfare official, emergency services, 911). In some embodiments, the alarm device can be any appropriate circuit and/or mechanism that is configured for taking a predetermined action in response to a trigger, and does not necessarily require nor preclude that the alarm device is itself capable of generating an audible alarm.

In some embodiments, activating the alarm device can include activating an audio output component disposed within the housing and configured to emit an audible alert when activated. For example, the mobile accessory device 100M can include the audio output device 114 that can emit a siren, noise, prerecorded or synthesized spoken words or other sounds, or any other appropriate sound that is sufficiently loud enough to attract the attention of other nearby persons and/or repel an attacker. In some embodiments, activating the alarm device can include activating a visual output configured to emit an audible alert when activated. For example, the mobile accessory device 100M can include the light output device 116 that can emit a light or strobe to attract the attention of other nearby persons and/or repel an attacker.

In another configuration, the mobile accessory device need not be configured to be physically attachable to the mobile device, but rather may be implemented as a standalone unit that can be carried or worn by a user (e.g., as a wallet attachment or insert, key fob, bracelet, or the like), and which maintains a wireless communication connection between the accessory and the mobile device. In this configuration, other than the lack of physical attachment, the accessory can be designed and implemented to have any or all of the same features and/or functionality as the configuration in which the accessory is designed to be attached to the mobile device, as described above.

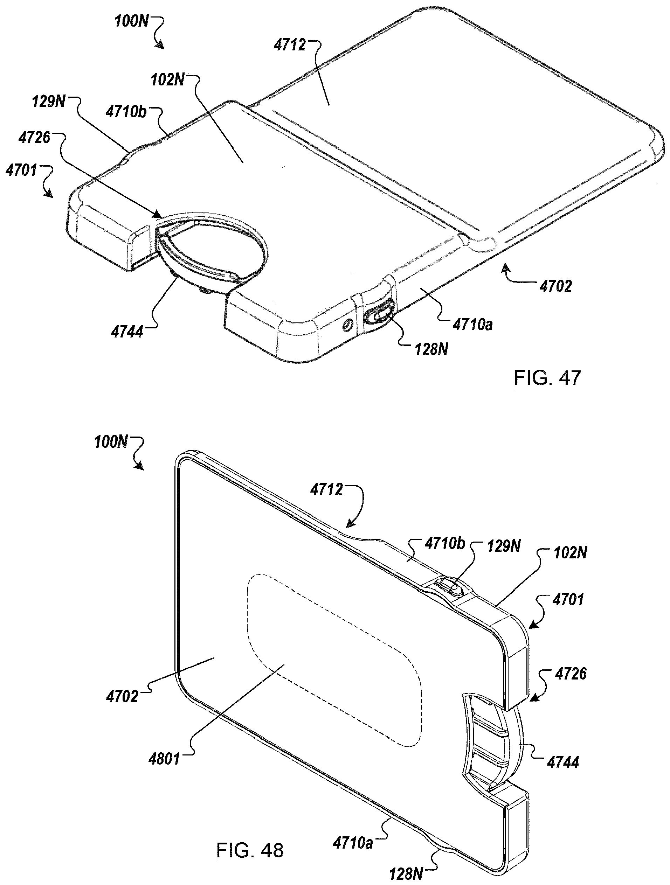

FIGs. 47-49B illustrate various views of a mobile accessory device 100N according to an additional example embodiment of the present disclosure. The mobile accessory device 100N is configured to be attached to the mobile phone 200, either directly or indirectly, as will be discussed further below. The overall configuration and features of the mobile accessory device 100N may be substantially similar to, or a subset of, that of the mobile accessory device 100 of FIG. 1. However, the mobile accessory device 100N of FIGS. 47-49B may vary in one or more respects.

The mobile accessory device 100N includes a housing 102N and a user input sensor having a movable component 4744 (e.g., a sliding switch, a pull tab, a trigger component), which serves as a user input mechanism, and is configured to activate when the movable component 4744 is at least partially moved relative to the housing 102N, and controller (e.g., the controller 112 of FIG. 7, not shown here) disposed in the housing 102N and configured to activate in response to activation of the user input sensor. Activation of the controller can cause an audible alarm, or cause a software application to be executed on the mobile phone 200, or both. The audible alarm can come either from an optional audio emitting device disposed in the mobile accessory device 100N or (e.g., in embodiments where the mobile accessory device 100N does not include an audio emitting device) from the mobile phone 200, e.g., using a speaker built into the mobile phone 200.

For example, as illustrated, the position of the components of the mobile accessory device 100N relative to a housing 102N may vary. The movable component 4744 is configured to remain in a stowed (e.g., un-extended) configuration until the user slide the movable component 4744 away from the stowed configuration relative to the housing 102N. Moving or releasing the movable component 4744 may activate one or more features. For example, in response to the movable component 4744 being moved, removed (at least in part), shifted, or released, the position location detector system 154 or 210 (see, FIG. 7) may be instructed to activate via the communication mechanisms described above. Further, the user's location may be tracked, e.g., using GPS-like functionality built into the mobile accessory device 100N or the mobile phone 200, during the time period in which the movable component 4744 is out of its default position and thereby the user's location information may optionally be shared with one or more persons, if desired, e.g., using the communications capabilities of the mobile phone 200 or the mobile accessory device 100N (e.g., phone, email, SMS text).

Further, the mobile accessory device 100N may include a slot 4726, a recess, a depression, a textured area, or a feature providing equivalent functionality to ease movement of the moveable component 4744, positioned between the movable component 4744 and the housing 102N. In this regard, in some embodiments the user input sensor arrangement may be activated, for example, by engaging a fingertip or fingernail or equivalent in the slot 4726 and moving the movable component 4744. Thereby, based on user input, activation of the user separation sensor arrangement may be conducted quickly (e.g., in an unexpected dangerous situation), if necessary, for example, by moving (at least in part) the movable component 4744.

In some embodiments, the movable component 4744, which serves as a user input mechanism, may be supplemented or substituted with one or more other mechanical features configured to provide frictional, grippable, or graspable surface or element to ease releasing or moving the movable component 4744. Examples of such mechanical features can include raised or recessed ribs, dimples, latches, loops, hooks, projections, textures (e.g., rough, soft, sticky), or combinations of these or other mechanical features that can promote manual operation (e.g., movement or removal) of the movable component 4744.

Alternatively, or in addition, other user input mechanisms (e.g., switches or buttons) may be used as a user input mechanism to trigger actuation of the mobile accessory device 100N. In one such embodiment, a switch 128N (e.g., a button) is arranged on a lateral side 4710a of the housing 102N, substantially perpendicular to a major face surface 4712. Another switch 129N is arranged on a lateral side 4710b of the housing 102N, substantially perpendicular to the major face surface 4712 opposite the switch 129N. The switch 128N and/or the switch 129N may be a depressible button, pressure sensitive, or membrane switches defined as a fingertip-sized recess or protrusion having a textured pattern (e.g., to facilitate identification and location of the switch by either sight or touch). In use, the switch 128N and the switch 129N are pressed substantially simultaneously. For example, in the illustrated configuration, a user can squeeze the switch 128N and the switch 129N with two different fingers of one hand in order to activate an alarm, thereby reducing a likelihood of false alarms due to accidental actuation of a single button. The switches may be used to activate an alarm or non-alarm function though a predetermined continuous press (e.g., three seconds), through a predetermined series of presses (e.g., three presses within five seconds), or through a particular sequence of presses (e.g., first pressing the switch 128N and then the switch 129N), for example, to reduce the occurrence of accidental activation. In some embodiments, the user input mechanism can be configured to differentiate between and respond to multiple different user inputs. For example, the user can use one predetermined combination of buttons and press patterns to activate one response, and can use another predetermined combination to active another response. In a more specific example, one press the switch 128N could be used to activate a texting application on the mobile phone, two presses could be used to activate a camera app on the mobile phone, and three presses could be used to activate one or more of the alarm functions.

Alternatively, or in addition, other user input mechanisms (e.g., microphones, audio sensors) may be used as a user input mechanism to trigger actuation of the mobile accessory device 100N. In one such embodiment, the mobile accessory device 100N can include a microphone and sound detector circuit (e.g., the sound detector arrangement 150 and the microphone 152). The sound detector circuit can be configured to respond to predetermined sounds or sound patterns as a user input (e.g., voice commands, shouts, alarms, horns, sirens, beeps, bells). In some implementations, the sound detector circuit can respond to sounds as user inputs by triggering its internal alarm functions, by triggering another device (e.g., activating an application on a mobile phone to send a message for help, causing a mobile phone to emit an audible or visual alarm), or by triggering an existing function of another device (e.g., activating a voice assistant or other voice-responsive feature of a mobile phone or other device in communication with the mobile accessory device 100N).

In some implementations, the switches 128N and 129N may activate a different type of action than may be triggered by separation of the movable component 4744. For example, the mobile accessory device 100N may respond to activation of the switches 128N and 129N by initiating a silent alarm to alert one or more predetermined recipients (e.g., causing the mobile phone 200 to discretely send a message to a preselected contact), while the mobile accessory device 100N may respond to movement or partial removal of the movable component 4744 by initiating an audible alarm and alerting one or more predetermined recipients (e.g., set off a siren and send a message or place a phone call to police). The audible alarm can come either from an optional audio emitting device disposed in the mobile accessory device 100N or (e.g., in embodiments where the mobile accessory device 100N does not include an audio emitting device) from the mobile phone 200, e.g., using a speaker built into the mobile phone 200.

In some embodiments, the movable component 4744 (e.g., pull tab) can be configured to be at least partly moved relative to the housing 102N when subjected to a predetermined force. In some embodiments, the mobile accessory device 100N can include a wearable component having a lanyard (e.g., the example wearable component 120) configured to mechanically attach to the housing 102N and/or the movable component 4744 and provide at least the predetermined force to the movable component based on a pull of upon the lanyard and at least partly move the movable component relative to the housing 102N based on the pull.

The mobile accessory device 100N has a rear surface 4702 substantially parallel to the major face surface 4712. In the illustrated example, an adhesive pad 4810 is affixed to the rear surface 4702. In use, the adhesive pad 4801 can be pressed against another surface (e.g., the rear of the mobile phone 200) to attach the mobile accessory device 100N to the other surface.

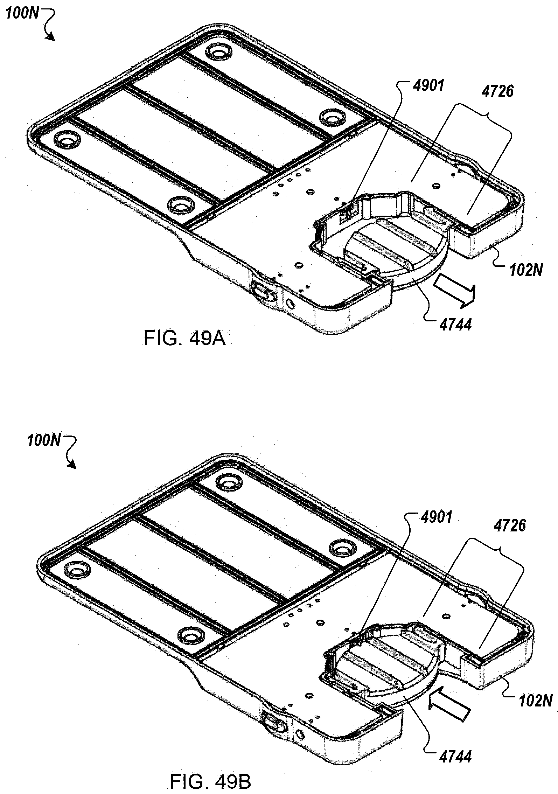

FIGs. 49A and 49B illustrate a sectional view of the example mobile accessory device 100N of FIG. 47. These views are provided to show the configuration and operation of the movable component 4744 relative to the housing 102N.

FIG. 49A shows the mobile accessory device 100N in a first configuration (e.g., a triggered configuration). The movable component 4744 is configured to move linearly along the slot 4726. FIG. 49B shows the mobile accessory device 100N in a second configuration (e.g., a default, un-triggered configuration). The movable component 4744 can be slid along the slot 4726 (e.g., inward, toward the center of the housing 102N) to change the movable component 4744 from the first configuration to the second configuration, and the movable component 4744 can be slid along the slot 4726 (e.g., outward, away from the center of the housing 102N) to change the movable component 4744 from the second configuration to the first configuration (e.g., to trigger an alarm function). As the movable component 4744 is actuated between the two configurations, the movable component 4744 activates and releases a switch 4901 (e.g., as part of the user input sensor 122).

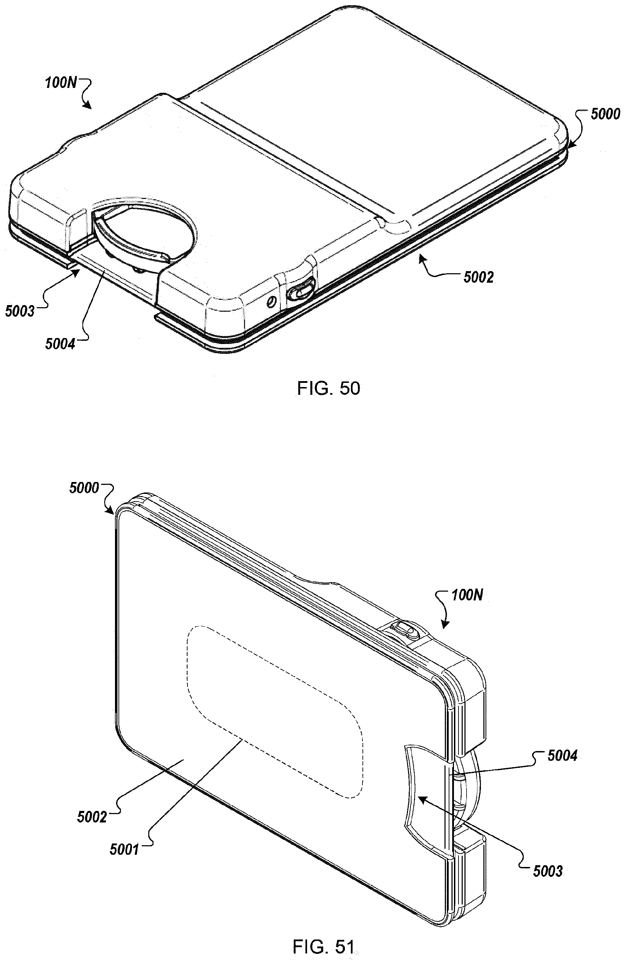

FIG. 50 illustrates a perspective from view of the example mobile accessory device 100N of FIGs. 47 and 49B an example companion mobile accessory device 5000. FIG. 51 illustrates a perspective rear view of the example mobile accessory device 100N and companion mobile accessory device 5000. FIGs. 50 and 51 shows the mobile accessory device 100N adhered or affixed to the companion mobile accessory device 5000 (e.g., a wallet for holding identification cards, credit cards, cash, or the like). In some embodiments, the companion mobile accessory device 5000 can, in turn, be adhered, affixed, or otherwise coupled to the mobile phone 200.

Referring now to FIG. 51. A rear side 5002 of the companion mobile accessory device 5000 includes an adhesive pad 5001. In use, the adhesive pad 5001 can be contacted against a surface of the mobile phone 200 (e.g., the rear surface 202), or any other appropriate surface. The companion mobile accessory device 5000 defines a cavity 5003. The cavity 5003 is configured to removably retain one or more wallet-sized cards 5004, such as credit cards, identification cards (e.g., driver's license), loyalty cards, security access cards, folded cash, or any other appropriately sized items.

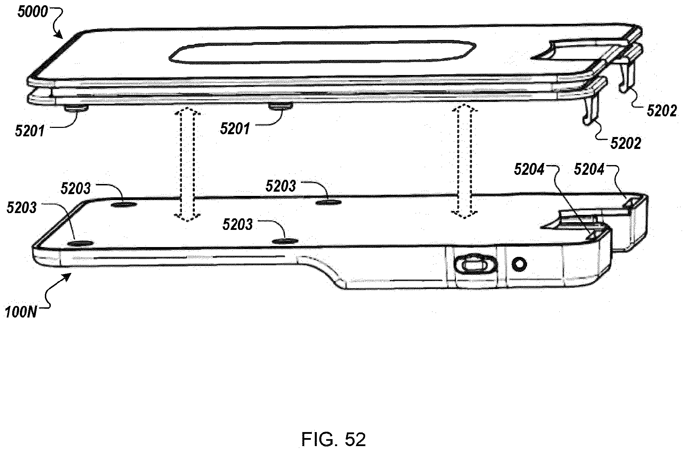

FIG. 52 illustrates a partially exploded perspective side view of the example mobile accessory device 100N and the companion mobile accessory device 5000. In the illustrated example, the companion mobile accessory device 5000 includes a collection of pins 5201 and tabs 5202, and the mobile accessory device 100N includes a corresponding collection of bores 5203 and slots 5204. The pins 5201 and the bores 5203, and the tabs 5202 and the slots 5204 are configured to matingly engage to mechanically affix the companion mobile accessory device 5000 to the mobile accessory device 100N.

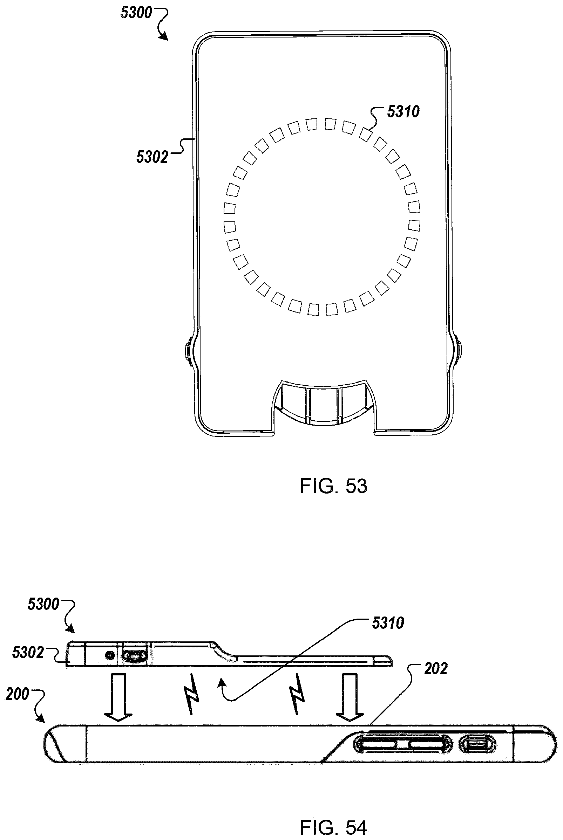

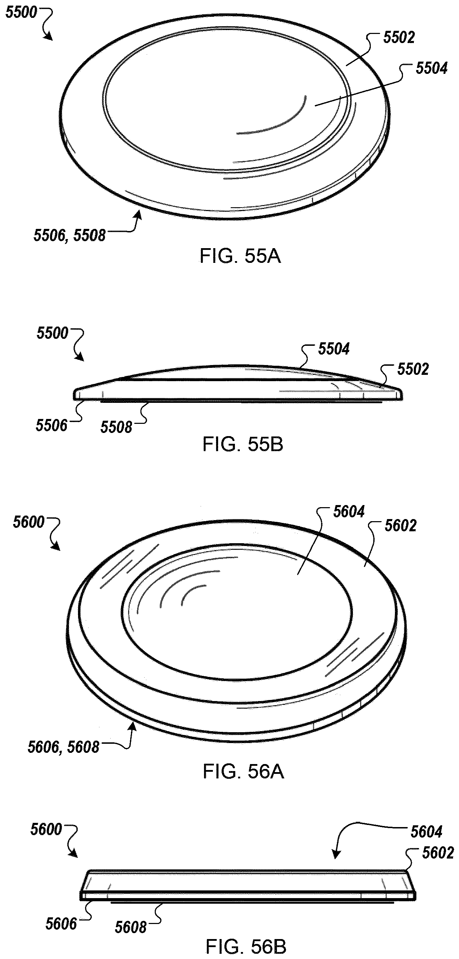

FIGs. 53 and 54 illustrate an example mobile accessory device 5300 having magnetic features. In some embodiments, the mobile accessory device 5300 can be a modification of the example mobile accessory device 100N of FIGs. 47-49B, or the combination of the mobile accessory device 100N and the example companion mobile accessory device 5000 device of FIGs. 50-52.

The mobile accessory device 5300 includes a housing 5302, and the housing 5302 includes an attachment component 5310 that is configured to magnetically engage corresponding magnetic features provided on the rear surface 202 of the mobile phone 200. In some embodiments, the attachment component 5310 can be made of a magnet, a collection of magnets, a magnetic material, or combination of these and any other appropriate passively or actively magnetic components that can magnetically couple the mobile accessory device 5300 to the mobile phone 200.

In some embodiments, the mobile accessory device 5300 can include sensors that can determine whether or not the mobile accessory device 5300 is attached, coupled, or otherwise substantially abutted to the mobile phone 200. For example, the mobile accessory device 5300 can include a switch (e.g., a momentary pin switch that is kept depressed by contact between the mobile accessory device 5300 and the rear surface 202 and released when the two become separated), a photonic sensor (e.g., an illuminator and a photodetector that can detect the presence or absence of illumination reflected off the rear surface 202), or a magnetic sensor (e.g., a Hall sensor or reed switch in the mobile accessory device 5300 that is configured to be activated when mobile accessory device 5300 is moved too far away from the magnetic features provided on the rear surface 202). In some embodiments, the mobile accessory device 5300 can include a wearable component such as a tether or a lanyard (e.g., the example wearable component 120) configured to mechanically attach to the housing 5302 and provide at least a predetermined force to the housing 5302 based on a pull of upon the lanyard and at least partly separate the mobile accessory device 5300 from the mobile phone 200 based on the pull.

FIG.s 55A and 55B illustrate perspective and side views of an example of a mobile accessory device button 5500 according to an additional example embodiment of the present disclosure. The mobile accessory device button 5500 is configured to be attached to the mobile phone 200, either directly or indirectly, as will be discussed further below. The overall configuration and features of the mobile accessory device button 5500 may be substantially similar to, or a subset of, that of the mobile accessory device 100 of FIG. 1. However, the mobile accessory device button 5500 may vary in one or more respects.

The mobile accessory device button 5500 includes a housing 5502 and a button 5504 that serves as a user input mechanism, and is configured to activate when the button 5504 is at least partially moved relative to the housing 5502, and controller (e.g., the controller 112 of FIG. 7, not shown here) disposed in the housing 5502 and configured to activate in response to activation of the user input sensor. In the illustrated example, the housing 5502 and the button 5504 are configured with a generally convex (e.g., domed) shape.

Activation of the controller can cause an audible alarm, or cause a software application to be executed on the mobile phone 200, or both. The audible alarm can come either from an optional audio emitting device disposed in the mobile accessory device button 5500 or (e.g., in embodiments where the mobile accessory device button 5500 does not include an audio emitting device) from the mobile phone 200, e.g., using a speaker built into the mobile phone 200. Alternatively, or in addition, other user input mechanisms (e.g., microphones, audio sensors) may be used as a user input mechanism to trigger actuation of the mobile accessory device button 5500.

A rear side 5506 of the mobile accessory device button 5500 includes an adhesive pad 5508. In use, the adhesive pad 5001 can be contacted against a surface of the mobile phone 200 (e.g., the rear surface 202), or any other appropriate surface. For example, the mobile accessory device button 5500 can be affixed, engaged, adhered, or other otherwise coupled atop a one-handed phone holder that is attached to the mobile phone 200. In some embodiments, the mobile accessory device button 5500 can include magnetic, adhesive, and/or mechanical features to enable attachment, adherence, affixment, engagement, and/or coupling of the mobile accessory device button 5500, directly or indirectly, to the mobile phone 200.

FIG.s 56A and 56B illustrate perspective and side views of an example of a mobile accessory device button 5600 according to an additional example embodiment of the present disclosure. The mobile accessory device button 5600 is configured to be attached to the mobile phone 200, either directly or indirectly, as will be discussed further below. The overall configuration and features of the mobile accessory device button 5600 may be substantially similar to, or a subset of, that of the mobile accessory device 100 of FIG. 1. However, the mobile accessory device button 5600 may vary in one or more respects.

The mobile accessory device button 5600 includes a housing 5602 and a button 5604 that serves as a user input mechanism, and is configured to activate when the button 5604 is at least partially moved relative to the housing 5602, and controller (e.g., the controller 112 of FIG. 7, not shown here) disposed in the housing 5602 and configured to activate in response to activation of the user input sensor. In the illustrated example, the housing 5602 and the button 5604 are configured with a generally concave (e.g., scalloped, indented, recessed) shape.

Activation of the controller can cause an audible alarm, or cause a software application to be executed on the mobile phone 200, or both. The audible alarm can come either from an optional audio emitting device disposed in the mobile accessory device button 5600 or (e.g., in embodiments where the mobile accessory device button 5600 does not include an audio emitting device) from the mobile phone 200, e.g., using a speaker built into the mobile phone 200. Alternatively, or in addition, other user input mechanisms (e.g., microphones, audio sensors) may be used as a user input mechanism to trigger actuation of the mobile accessory device button 5600.

A rear side 5606 of the mobile accessory device button 5600 includes an adhesive pad 5608. In use, the adhesive pad 5001 can be contacted against a surface of the mobile phone 200 (e.g., the rear surface 202), or any other appropriate surface. For example, the mobile accessory device button 5600 can be affixed, engaged, adhered, or other otherwise coupled atop a one-handed phone holder that is attached to the mobile phone 200. In some embodiments, the mobile accessory device button 5600 can include magnetic, adhesive, and/or mechanical features to enable attachment, adherence, affixment, engagement, and/or coupling of the mobile accessory device button 5600, directly or indirectly, to the mobile phone 200.

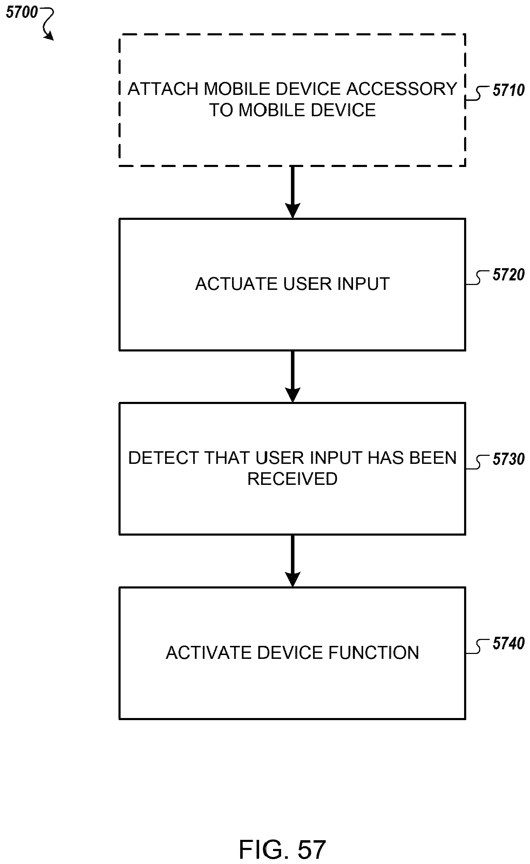

FIG. 57 is a flow chart of an example process 5700 using an example mobile accessory device. In some implementations, the process 5700 can be performed using one or more of the example mobile device accessories 100A-100N an5 5300-5600 of FIGs. 1-23, and 25-35, the personal safety device 300 of FIG. 23, the mobile accessory device 100M of FIGs. 37a-43, the mobile accessory device 100N of FIGs. 47-52, the mobile accessory device 5300 of FIGs. 53-54, and the mobile accessory device buttons 5500 and 5600 of FIG.s 55A-56B.

At an option step 5710, an attachment surface of a housing of a mobile accessory device is engaged to a mobile device. For example, the surface 4801 of the housing 102N may be configured to engage the rear surface 202 of the mobile phone 200. In another example, the attachment component 5310 shown in FIG. 53 can be used to secure (e.g., magnetically couple) the mobile accessory device 5300 to the mobile phone 200.

At 5720, a user input of the mobile accessory device is received. For example, one or a combination or a pattern of the switches 128N, 129N may have been pressed by a user. In another example, the movable component 4744 may have been actuated or partly moved by a user. In another example, the button 5504 may be pressed by a user.

At 5730, a user input sensor detects that, based on the received user input, the mobile accessory device has been actuated. For example, the user input sensor 122 can determine that the movable component 4744 has been moved, removed (at least partially), released, or shifted, or that the switch 128N and/or the button 129N has been pressed.

In some embodiments, the process 5700 can include detecting a mechanical separation of the housing and a lanyard affixed to a wearable component, the lanyard having a predetermined length and mechanically connecting the wearable component to the housing, the lanyard being mechanically separable from the housing when distance between the wearable component and the housing exceeds the predetermined length. For example, the movable component 4744 can be connected to the wearable component 120, and the user input sensor 122 can determine that the wearable component 120 has caused the movable component 4744 to move or at be at least partly removed from the housing 102N.

At 5740, a device function is activated based on detecting that the user input has been actuated. For example, the controller 112 of FIG. 7 can be activated. In some embodiments, activating the device function can include transmitting an alarm signal; and wherein the process 5700 can also include receiving, by mobile device, the alarm signal, and sending, by the mobile device and in response to the receiving the alarm signal, a predetermined communication to one or more predefined recipients. For example, the controller 112 of FIG. 7 can activate the communication interface 134 to communicate with the mobile phone 200. The mobile phone 200 may have a software application installed and executing thereupon, and the software application can be configured to react to the communication from the mobile accessory device 100M to cause the mobile phone to communicate with one or more predetermined recipients, and/or to emit an audible alarm or other sound. For example, the software application may be configured to initiate a call, send a text message, email, media file, media stream, location information (e.g., GPS data), captured audio and/or video, or any other appropriate information to one or more contacts previously identified by the user (e.g., family member, friend, neighbor, doctor, nurse, caregiver, welfare official, emergency services, 911). In some embodiments, the device function can be any appropriate circuit and/or mechanism that is configured for taking a predetermined action in response to a trigger, and does not necessarily require nor preclude that the alarm device is itself capable of generating an audible alarm.

In some embodiments, activating the device function can include activating an audio output component disposed within the housing and configured to emit an audible alert when activated. For example, the mobile accessory device 100N can include the audio output device 114 that can emit a siren, noise, prerecorded or synthesized spoken words or other sounds, or any other appropriate sound that is sufficiently loud enough to attract the attention of other nearby persons and/or repel an attacker. In some embodiments, activating the alarm device can include activating a visual output configured to emit an audible alert when activated. For example, the mobile accessory device 100N can include the light output device 116 that can emit a light or strobe to attract the attention of other nearby persons and/or repel an attacker.

In some embodiments, activating the device function can include activating a non-alarm function of the device. For example, the mobile accessory device 100N can be configured to respond to activation by communicating with the mobile phone 200. The mobile device can be configured (e.g., with an application executing on the mobile phone 200) to receive the communication and respond by activating a function of the mobile phone 200 (e.g., opening an app, taking a photo, triggering an alarm, activating a voice assistant into a standby or listening mode).

In another configuration, the mobile accessory device need not be configured to be physically attachable to the mobile device, but rather may be implemented as a standalone unit that can be carried or worn by a user (e.g., as a wallet attachment or insert, key fob, bracelet, or the like), and which maintains a wireless communication connection between the accessory and the mobile device. In this configuration, other than the lack of physical attachment, the accessory can be designed and implemented to have any or all of the same features and/or functionality as the configuration in which the accessory is designed to be attached to the mobile device, as described above.

Although a few implementations have been described in detail above, other modifications are possible. For example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claim.

### EMBODIMENTS:

Although the present invention is defined in the claims, it should be understood that the present invention can also (alternatively) be defined in accordance with the following embodiments:
1. A mobile accessory device comprising:
   a housing;
   a user input apparatus configured to activate in response to input by a user and comprising:
      (a) a trigger component movable relative to the housing and comprising a feature configured to facilitate movement of the trigger component relative to the housing, the feature comprising at least one of a slot, a void, or a recess; and,
      (b) a sound detection circuit configured to activate in response to one or more predetermined sounds; or
      (c) both; and
   a first communication circuit configured to activate and communicate with a second communication circuit in response to activation of the user input apparatus.
2. The mobile accessory device of embodiment 1, wherein the trigger component is at least partly retained within a slot defined in the housing, and the trigger component is configured to move along a portion of the slot.
3. The mobile accessory device of embodiment 1, wherein the housing is configured to mechanically engage a mobile device.
4. The mobile accessory device of embodiment 1, wherein the housing is configured to magnetically attach to a mobile device.
5. The mobile accessory device of embodiment 3, further comprising at least one of a magnet and a magnetic material.
6. The mobile accessory device of embodiment 1, wherein the one or more predetermined sounds comprises one or more utterances that can be recognized when spoken by the user.
7. The mobile accessory device of embodiment 1, wherein the second communication circuit is configured to communicate with one or more cellular networks.
8. The mobile accessory device of embodiment 1, wherein the second communication circuit is in wired communication with the first communication circuit.
9. The mobile accessory device of embodiment 1, wherein the second communication circuit is disposed within the housing.
10. The mobile accessory device of embodiment 1, further comprising an alarm device comprising (i) an audio output device, (ii) a light output device, or (iii) both, configured to activate in response to activation of the user input apparatus.
11. The mobile accessory device of embodiment 1, wherein communication with the second communication circuit causes a software application to be executed on a mobile device.
12. The mobile accessory device of embodiment 1, wherein the housing defines a cavity configured to retain one or more credit cards or identification cards.
13. The mobile accessory device of embodiment 1, wherein a mobile device comprises the second communication circuit.
14. The mobile accessory device of embodiment 1, wherein the mobile accessory device is a standalone personal safety device configured to communicate with cellular networks.
15. The mobile accessory device of embodiment 1, wherein the first communication circuit is further configured to communicate a position location, determined by a position location detector system, to the second communication circuit in response to activation of the user input apparatus.
16. The mobile accessory device of embodiment 15, wherein the mobile accessory device further comprises the position location detector system.
17. The mobile accessory device of embodiment 1, wherein the first communication circuit is at least partly disposed in the housing and configured to perform operations comprising:
   establishing a communications connection to the second communication circuit;
   detecting activation of the user input apparatus; and
   in response to the activation, communicating with the second communication circuit.
18. A method of communication comprising:
   detecting, by control circuitry of a mobile accessory device, user input based on activation of a user input apparatus comprising:
      (a) a trigger component moveable relative to a housing of the mobile accessory device and comprising a feature configured to facilitate movement of the trigger component relative to the housing, the feature comprising at least one of a slot, a void, or a recess;
      (b) a sound detection circuit configured to activate in response to one or more predetermined sounds; or
      (c) both; and
   establishing a communications connection from the control circuitry to a communication circuit; and
   communicating with the communication circuit.
19. The method of embodiment 18, wherein the trigger component is at least partly retained within a slot defined in the housing, and the trigger component is configured to move along a portion of the slot.
20. The method of embodiment 18, further comprising:
   moving the trigger component relative to the housing; and
   activating the user input apparatus based on the moving.
21. The method of embodiment 18, further comprising:
   receiving, by the sound detection circuit, a sound;
   identifying, by the sound detection circuit, the sound as corresponding to a predetermined sound; and
   activating the user input apparatus based on the identifying.
22. The method of embodiment 21, further comprising uttering, by a user, the sound.
23. The method of embodiment 18, further comprising mechanically engaging the housing to a mobile device.
24. The method of embodiment 18, further comprising magnetically attaching the housing to a mobile device.
25. The method of embodiment 18, wherein communicating with the communication circuit comprises communicating with one or more cellular networks.
26. The method of embodiment 18, wherein the communication connection comprises a wired communication connection.
27. The method of embodiment 18, further comprising activating, in response to the detecting, an alarm device comprising (i) an audio output device, (ii) a light output device, or (iii) both.
28. The method of embodiment 18, further comprising (i) causing an audible alarm to be emitted by an audio output device, or (ii) causing a software application to be executed on a mobile device, or (iii) both.
29. The method of embodiment 18, further comprising:
   determining, by a position location detector system, a position location of the mobile accessory device; and
   communicating, in response to the detecting, the determined position location.
30. The method of embodiment 29, wherein the mobile accessory device further comprises the position location detector system.

## Claims

1. A personal safety mobile accessory device (100N), the personal safety mobile accessory device comprising:
a housing (102N);
a controller disposed in the housing and configured to activate in response to a user input sensor, wherein the controller is configured to cause an audible alarm or cause a software application to execute on a mobile phone (200) in response to activation;
the user input sensor configured to activate in response to user input provided by a user through a trigger component (4744), wherein the user input sensor comprises
(a) the trigger component (4744) movable relative to the housing (102N) and comprising a feature configured to facilitate movement of the trigger component (4744) relative to the housing (102N), wherein the feature comprises at least one of a slot, a void, or a recess, wherein the trigger component (4744) is configured to remain in a stowed configuration until the user slides the trigger component (4744) away from the stowed configuration relative to the housing (102N), wherein the user input sensor is configured to activate when the trigger component (4744) is at least partially moved relative to the housing (102N), wherein a location of the user is tracked using a position location detetection system that provides tracking functionality built into the personal safety mobile accessory device (100N) or the mobile phone (200), and wherein the tracking is performed during a time period in which the trigger component (4744) is out of the stowed configuration as a default position of the trigger component (4744), and
(b) a sound detection circuit configured to activate in response to one or more predetermined sounds; and
a first communication circuit configured to activate and communicate the tracked user's location with a second communication circuit in the mobile phone (200) or with cellular networks in response to activation of the user input sensor.

2. The mobile accessory device of claim 1, wherein the trigger component is at least partly retained within a slot defined in the housing, and the trigger component is configured to move along a portion of the slot.

3. The mobile accessory device of claim 1, wherein the housing is configured to mechanically engage with the mobile phone.

4. The mobile accessory device of claim 1, wherein the housing is configured to magnetically attach to the mobile phone, wherein the housingfurther comprises at least one of a magnet and a magnetic material.

5. The mobile accessory device of claim 1, wherein the one or more predetermined sounds comprises one or more utterances that can be recognized when spoken by the user.

6. The mobile accessory device of claim 1, wherein the second communication circuit is configured to communicate with one or more cellular networks.

7. The mobile accessory device of claim 1, wherein the second communication circuit is in wired communication with the first communication circuit.

8. The mobile accessory device of claim 1, wherein the second communication circuit is disposed within the housing.

9. The mobile accessory device of claim 1, further comprising an alarm device comprising (i) an audio output device, (ii) a light output device, or (iii) both, configured to activate in response to activation of the user input sensor.

10. The mobile accessory device of claim 1, wherein communication with the second communication circuit causes a software application to be executed on a mobile device.

11. The mobile accessory device of claim 1, wherein the housing defines a cavity configured to retain one or more credit cards or identification cards.

12. The mobile accessory device of claim 1, wherein a mobile device comprises the second communication circuit.

13. The mobile accessory device of claim 1, wherein the first communication circuit is further configured to communicate a position location of the mobile accessory device, determined by the position location detector system, to the second communication circuit in response to activation of the user input sensor.

14. The mobile accessory device of claim 1, wherein the first communication circuit is at least partly disposed in the housing and configured to perform operations comprising:
establishing a communications connection to the second communication circuit;
detecting activation of the user input sensor; and
in response to the activation, communicating with the second communication circuit.
